(19) Europäisches Patentamt / European Patent Office / Office européen des brevets

(11) **EP 4 443 115 A1**

(12) **EUROPEAN PATENT APPLICATION**

(43) Date of publication:
**09.10.2024 Bulletin 2024/41**

(21) Application number: **23167141.3**

(22) Date of filing: **06.04.2023**

(51) International Patent Classification (IPC):
**G01F 1/58** (2006.01)

(52) Cooperative Patent Classification (CPC):
**G01F 1/586; G01F 1/588**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Sensus Spectrum LLC.**
**Morrisville, NC 27560 (US)**

(72) Inventors:
• **Piazza, Vincenzo**
  **Cambridge, CB4 1DL (GB)**
• **Broom, Michael**
  **Cambridge, CB4 1DL (GB)**
• **Hawkesford, James**
  **Cambridge, CB4 1DL (GB)**
• **Zhao, Max-Zijian**
  **Cambridge, CB4 1DL (GB)**
• **Davey, Benjamin**
  **Cambridge, CB4 1DL (GB)**

(74) Representative: **Dunleavy, Christopher Squire et al**
**Venner Shipley LLP**
**406 Cambridge Science Park**
**Milton Road**
**Cambridge CB4 0WW (GB)**

(54) **ELECTROMAGNETIC FLOW SENSOR**

(57)    An electromagnetic flow sensor (3) is described which includes a flow tube (4) extending along a first axis (z) and through which a fluid is able to flow (5). The electromagnetic flow sensor (3) also includes first (1) and second (2) electrodes spaced apart along a second axis (x) transverse to the first axis (z) to span a measurement volume (8) within the flow tube (4). The electromagnetic flow sensor (3) also includes a magnetic circuit (14, 56, 65) including a coil (52) and a gap defined between first (12) and second (13) parallel pole faces. The flow tube (4) is received within the gap such that magnetic field about the magnetic circuit (14, 56, 65) is directed across the measurement volume (8) parallel to a third axis (y) transverse to the first (z) and second (x) axes. The magnetic circuit (14, 56, 65) is shaped to enhance uniformity of magnetic field within at least a central portion (55) of the measurement volume (8).

FIG. 9A

FIG. 9B

EP 4 443 115 A1

## Description

### Field of the Invention

This invention relates to the field of electromagnetic flow sensing of conductive fluids such as water, particularly where accuracy is important.

### Background

The following discussion of the background to the invention is intended to facilitate an understanding of the invention. However, it should be appreciated that the discussion is not an acknowledgement or admission that any aspect of the discussion was part of the common general knowledge as at the priority date of the application.

Battery-powered electromagnetic flow meters (which may also be referred to as "magnetic flow meters" or "mag meters") for residential water metering are known, and examples include the iPERL (RTM) range of water meters available from Sensus Inc. Reference is also made to WO 00/19174 A1, US 3,911,742 A, WO 2017/017463 A1, WO 2018/138518 A1, and US 4,716,769 A.

### Summary

According to a first aspect of the invention there is provided an electromagnetic flow sensor including a flow tube extending along a first axis and through which a fluid is able to flow. The electromagnetic flow sensor also includes first and second electrodes spaced apart along a second axis transverse to the first axis to span a measurement volume within the flow tube. The electromagnetic flow sensor also includes a magnetic circuit including a coil and a gap defined between first and second parallel pole faces. The flow tube is received within the gap such that magnetic field about the magnetic circuit is directed across the measurement volume parallel to a third axis transverse to the first and second axes. The magnetic circuit is shaped to enhance uniformity of magnetic field within at least a central portion of the measurement volume.

The enhanced uniformity may correspond to reduced variation in the magnitude of magnetic field, or the magnetic field component parallel to the third axis (in either case measured in Tesla, T) when moving across at least the central portion of the measurement volume parallel to the second axis. The magnitude of the magnetic field, or the component of magnetic field parallel to the third axis, may be substantially uniform when moving across at least the central portion of the measurement volume parallel to the second axis.

References to magnetic field values may correspond to the magnitude $|\underline{B}|$ of the magnetic field, or to the component $B_3$ parallel to the third axis (with $\underline{B} = (B_1, B_2, B_3)$ being the component representation of magnetic field $\underline{B}$ relative to first, second and third axes). Substantially uniform may correspond to a minimum value (magnitude or component parallel to the third axis) being greater than or equal to 80% of a maximum value. Preferably, substantially uniform may correspond to the minimum value being greater than or equal to 90% of the maximum value.

The enhanced uniformity may correspond to the magnetic field in a stable, steady state. In examples for which the magnetic field polarity is regularly or occasionally reversed, the state of enhanced uniformity may refer to a situation after a field reversal period and a stabilisation period.

The central portion may correspond to 70% or more of the width of the measurement volume parallel to the second axis. Preferably, the central portion may correspond to 80% or more of the width of the measurement volume parallel to the second axis. More preferably, the central portion may correspond to 90% or more of the width of the measurement volume parallel to the second axis. The central portion may be co-centred with the measurement volume parallel to the second axis. Alternatively, a centroid of the central portion may be offset parallel to the second axis relative to a centroid of the measurement volume.

The magnetic field is preferably substantially symmetric about a plane perpendicular to the first axis and disposed at a midpoint of the measurement volume. More preferably, the magnetic field directed along the third axis may be substantially uniform when moving across at least the central portion of the measurement volume parallel to the first axis.

The magnetic circuit may be shaped to reduce, or preferably minimise, a difference between a first magnetic field (magnitude or component parallel to the third axis) at the first electrode and a second magnetic field (magnitude or component parallel to the third axis) at the second electrode. In other words, the magnetic circuit may be shaped so as to counteract an inherent asymmetry in the magnetic field between the first and second pole faces arising from presence of the coil on one side of the measurement volume (relative to the second axis).

Magnetic field will naturally concentrate along the closed paths having minimum reluctance between exiting and re-entering the coil, which with all else being equal would pass through portions of the first and second pole faces which are closer to the coil. However, by shaping the magnetic circuit to re-distribute high reluctance materials (e.g. air/fluid) and low reluctance materials (e.g. soft iron), the relative reluctances of closed paths passing through the measurement volume (generally parallel to the third axis) may be made more similar, improving uniformity of magnetic field across the measurement volume.

Herein, the term transverse means situated across something or extending across something. In other words, the first, second and third axes are all oriented along different directions. For example, the first, second and third axes may be (but need not be) substantially perpendicular. Herein, "substantially perpendicular" may mean within an angle of $\pm 10°$.

The magnetic circuit may be generally C-shaped. The first and second pole faces may be arranged at inward facing ends of the C-shaped magnetic circuit.

The measurement volume may correspond to the volume of the flow tube which intersects magnetic field directed between the first and second pole faces. The measurement volume may correspond to a volume have a cross-section equal to the cross-section of the flow tube at the first and second electrodes and a length along the first axis equal to twice a length of the larger of the first and second pole faces along the first axis. Along the first axis, the measurement volume may be centred at a midpoint of the first and second pole faces. Preferably the midpoint of the measurement volume may be coincident with a midpoint of the first and second electrodes.

The length of the central portion parallel to the first axis may be less than or equal to 0.5 times the length of the first and/or second electrode parallel to the first axis. The length of the central portion parallel to the first axis may be less than or equal to the length of the first and/or second electrode parallel to the first axis. The length of the central portion parallel to the first axis may be less than or equal to 2 times the length of the first and/or or second electrode parallel to the first axis.

The length of the central portion parallel to the first axis may be 1 mm. The length of the central portion parallel to the first axis may be in the range between (and including) 5 mm to 12 mm. The length of the central portion parallel to the first axis may be less than or equal to 20 mm. The length of the central portion parallel to the first axis may be less than or equal to 40 mm.

The length of the central portion parallel to the first axis may be less than or equal to 0.5 times the length of the larger of the first and second pole faces parallel to the first axis. The length of the central portion parallel to the first axis may be less than or equal to the length of the larger of the first and second pole faces parallel to the first axis. The length of the central portion parallel to the first axis may be less than or equal to 2 times the length of the larger of the first and second pole face parallel to the first axis.

The magnetic circuit may include a first pole piece including a proximal end and a distal end forming the first pole face, and a second pole piece including a proximal end and a distal end forming the second pole face.

Windings of the coil may span the proximal ends of the first and second pole pieces. The proximal end of the first pole piece may be connected to the proximal end of the second pole piece by a central pole piece. Windings of the coil may be wrapped around the central pole piece.

The magnetic circuit may include, or be substantially formed from, one or more regions of remanent magnetic material. Substantially formed from may mean all parts of the magnetic circuit with the exception of the coil.

Each region of remanent magnetic material may include, or take the form of, a strip of remanent magnetic material. Each region of remanent magnetic material may include, or take the form of, several strips of remanent magnetic material, for example 4 to 10. The remanent magnetic material may include, or take the form of, a hard magnetic material such as, for example, iron or hard magnetic steel. The remanent magnetic material may include, or take the form of, an alloy comprising iron and one or more of nickel, aluminium, cobalt, carbon and/or silicon. The remanent magnetic material may include, or take the form of, an alloy comprising iron and one or more of nickel, manganese, molybdenum, carbon and/or silicon. For example, the remanent magnetic material may take the form of a semi15 hard magnetic material, such as Vacuumschmelze SENSORVAC (RTM), Hitachi ZMG423 (RTM) or MagneDur 20-4 (RTM).

The one or more remanent strips may be clamped, bonded or otherwise secured between one or more parts of the first pole piece and/or between one or more parts of the second pole piece.

When used, the central pole piece may include, or be formed of, remanent magnetic material. The central pole piece may include, or take the form of, one or more strips of remanent magnetic material.

The first pole piece may include one or more tabs formed at the proximal end. The second pole piece may include one or more tabs formed at the proximal end. The tabs may be arranged to minimise (or even remove) air gaps in closed paths passing through a region of remanent magnetic material and the measurement volume via the first and/or second pole faces. In other words, to remove air gaps other than the intended gap between the first and second pole faces.

The coil may be wrapped around a region of remanent magnetic material. In use, magnetic field directed across the measurement volume, or at least the central portion thereof, may include a component generated by the coil and/or a component corresponding to remanent polarisation of any regions of remanent magnetic material included in the magnetic circuit.

The electromagnetic flow sensor may include a battery for energising the coil. The electromagnetic flow sensor may be configured to periodically energise the coil to maintain and/or reverse a magnetisation of the one or more regions of remanent magnetic material. The coil may be energised to sustain the field if no remanent material regions are included.

The first and second pole faces may be formed from sheet material. The magnetic circuit may be formed, wholly or partly, from shaped and folded sheet material. Each of the first and second pole pieces may be formed from shaped and folded sheet material. One or more regions of remanent magnetic material may be secured between portions of the sheet material folded back on itself. The sheet material may include, or take the form of, sheets of any metal described herein.

The magnetic circuit may be supported by a frame or support formed from a non-magnetic material such as a polymeric material. The frame or support may secure different parts of the magnetic circuit relative to one another. The frame or support may secure the magnetic circuit relative to the flow tube.

The first pole face (for example the first pole piece providing it) may be formed by folding one or more regions of sheet material forming the magnetic circuit so as to lie substantially perpendicular to the third axis. The first pole face may be formed by two or more regions of sheet material. The first pole face may be formed from one or more regions of sheet material secured relative to the magnetic circuit using any suitable means such as, for example, attachment to the frame or support. Alternatively, the first pole face may be formed from a single region of sheet material bonded to the magnetic circuit connecting to the coil, for example by welding.

The second pole face (for example the second pole piece providing it) may be formed by folding one or more regions of sheet material forming the magnetic circuit so as to lie substantially perpendicular to the third axis. The second pole face may be formed by two or more regions of sheet material. The second pole face may be formed from one or more regions of sheet material secured relative to the magnetic circuit using any suitable means such as, for example, attachment to the frame or support. Alternatively, the second pole face may be formed from a single region of sheet material bonded to the magnetic circuit connecting to the coil, for example by welding.

The magnetic circuit may include a single coil. The magnetic circuit may be shaped to at least partially offset non-uniformity of magnetic field within at least the central portion of the measurement region arising from the single coil drive arrangement. The magnetic circuit may not include any further coils beyond the single coil.

The magnetic circuit may be shaped such that along a line connecting the respective centres of the first and second electrodes across the measurement volume, and within the portion of the line within the central portion, a minimum magnetic field is greater than or equal to 70% or more of a maximum magnetic field.

The minimum and maximum field values may correspond to total magnitudes of magnetic field $|\mathbf{B}|$ in tesla, T. The minimum and maximum field values may correspond to components $B_3$ parallel to the third axis in tesla, T. Along the section of the line within at least the central portion, the minimum magnetic field may be greater than or equal to 80% or more of the maximum magnetic field. Along the section of the line within at least the central portion, the minimum magnetic field may be greater than or equal to 90% or more of the maximum magnetic field.

The first pole face may include one or more cut-outs. Additionally or alternatively, the second pole face may include one or more cut-outs.

The one or more cut-outs of the first pole face and/or the one or more cut-outs of the second pole face may contribute to the magnetic circuit being shaped to enhance uniformity of magnetic field within at least the central portion of the measurement volume. The one or more cut-outs of the first pole face and/or the one or more cut-outs of the second pole face may be arranged to re-direct magnetic field (compared to the same magnetic circuit without the cut-outs) to increase uniformity of magnetic field within at least the central portion of the measurement volume.

One, some or all of the cut-outs of the first pole face may extend to an edge of the first pole face. One, some or all of the cut-outs of the first pole face may be wholly contained within a perimeter of the first pole face. One, some or all of the cut-outs of the first pole face may extend partway through a thickness of the first pole face parallel to the third axis. One, some or all of the cut-outs of the first pole face may extend entirely through a thickness of the first pole face parallel to the third axis. One, some or all of the cut-outs of the first pole face may have a rectilinear shape. Alternatively, one, some or all of the cut-outs of the first pole face may have curved edges, or a combination of curved and rectilinear shapes. The first pole face may include two or more cut-outs.

One, some or all of the cut-outs of the second pole face may extend to an edge of the second pole face. One, some or all of the cut-outs of the second pole face may be wholly contained within a perimeter of the second pole face. One, some or all of the cut-outs of the second pole face may extend partway through a thickness of the second pole face parallel to the third axis. One, some or all of the cut-outs of the second pole face may extend entirely through a thickness of the second pole face parallel to the third axis. One, some or all of the cut-outs of the second pole face may have a rectilinear shape. Alternatively, one, some or all of the cut-outs of the second pole face may have curved edges, or a combination of curved and rectilinear shapes. The second pole face may include two or more cut-outs.

Cut-outs may be formed by stamping. Alternatively, cut-outs may be formed by any suitable subtractive manufacturing process, for example cutting with a blade or saw, machining, drilling, chemical etching, or laser or water cutting.

When projected onto a plane perpendicular to the third axis, a cut-out of the first pole face may overlap a cut-out of the second pole face. When projected onto the plane perpendicular to the third axis, the cut-out of the first pole face may be coincident and coextensive with the cut-out of the second pole face.

When projected onto a plane perpendicular to the third axis, each cut-out of the first pole face may overlap with a corresponding cut-out of the second pole face. When projected onto a plane perpendicular to the third axis, each cut-out of the first pole face may be coincident and coextensive with a corresponding cut-out of the second pole face.

The measurement volume may have a width corresponding to the separation of the first and second electrodes parallel to the second axis. The first and second pole faces may have respective widths parallel to the second axis. The width of the first pole face may extend beyond the width of the measurement volume. Additionally or alternatively, the width of the second pole face may extend beyond the width of the measurement volume.

The width of the first pole face relative to the measurement volume and/or the width of the second pole face relative to the measurement volume may contribute to the magnetic circuit being shaped to enhance uniformity of magnetic field within at least the central portion of the measurement volume. The width of the first pole face and/or the width of the second pole face may be arranged to re-direct magnetic field to increase uniformity of magnetic field within at least the central portion of the measurement volume (compared to the same magnetic circuit with the widths of the first and second pole faces both equalling the width of the measurement volume).

The width of the first and/or second pole face(s) may extend beyond the width of the measurement volume for a distance of 40% of more of the width of the measurement volume. The width of the first and/or second pole face(s) may extend beyond the width of the measurement volume for a distance of 30% of more of the width of the measurement volume. The width of the first and/or second pole face(s) may extend beyond the width of the measurement volume for a distance of 20% of more of the width of the measurement volume. The width of the first and/or second pole face(s) may extend beyond the width of the measurement volume for a distance of 10% of more of the width of the measurement volume.

The first pole face may include one or more width-wise protrusions extending beyond the width of the measurement volume parallel to the second axis. Additionally or alternatively, the second pole face may include one or more width-wise protrusions extending beyond the width of the measurement volume parallel to the second axis.

Width-wise protrusions may have an aspect ratio of 1.5 or more. Width-wise protrusions may have an aspect ratio of 2 or more. Width-wise protrusions may have an aspect ratio of 3 or more. Width-wise protrusions may have an aspect ratio of 5 or more.

One, some or all of the width-wise protrusions of the first pole face may extend from an edge furthest from the coil. Furthest from the coil may mean physically, or may mean having the largest reluctance via the magnetic circuit. One, some or all of the width-wise protrusions of the first pole face may extend from an edge closest to the coil. Closest to the coil may mean physically, or may mean having the smallest reluctance via the magnetic circuit.

One, some or all of the width-wise protrusions of the second pole face may extend from an edge furthest from the coil. One, some or all of the width-wise protrusions of the second pole face may extend from an edge closest to the coil.

When projected onto a plane perpendicular to the third axis, a width-wise protrusion of the first pole face may overlap a width-wise protrusion of the second pole face. When projected onto the plane perpendicular to the third axis, the width-wise protrusion of the first pole face may be coincident and coextensive with the width-wise protrusion of the second pole face.

When projected onto a plane perpendicular to the third axis, each width-wise protrusion of the first pole face may overlap with a corresponding width-wise protrusion of the second pole face. When projected onto a plane perpendicular to the third axis, each width-wise protrusion of the first pole face may be coincident and coextensive with a corresponding width-wise protrusion of the second pole face.

Width-wise protrusions may have a rectilinear shape. Additionally or alternatively, width-wise protrusions may have curved edges, or a combination of curved and rectilinear shapes.

In other example the edge of the first pole face closest to the coil need not extend to the edge of the measurement volume. In other words, on the side closest to the coil, moving parallel to the second axis there may be a gap between the start of the measurement volume and the closest edge of the first pole face. Similarly, the edge of the second pole face closest to the coil need not extend to the edge of the measurement volume. In other words, on the side closest to the coil, moving parallel to the second axis there may be a gap between the start of the measurement volume and the closest edge of the second pole face.

A connection of the first pole face to the magnetic circuit may be offset relative to a centre of the first pole face along the second axis. A connection of the second pole face to the magnetic circuit may be offset relative to a centre of the second pole face along the second axis.

The offset of the connection of the first pole face to the magnetic circuit relative to the centre of the first pole face along the second axis and/or the offset of the connection of the second pole face to the magnetic circuit relative to the centre of the second pole face along the second axis may contribute to the magnetic circuit being shaped to enhance uniformity of magnetic field within at least the central portion of the measurement volume. The offset(s) of the connections of the first and/or second pole faces to the magnetic circuit may be arranged to re-direct magnetic field to increase uniformity of magnetic field within at least the central portion of the measurement volume (compared to the same magnetic circuit with central connections or with each pole face connected to the magnetic circuit across its entire width along the second axis).

The connection of the first pole face to the magnetic circuit may be offset relative to a centre of the measurement volume along the second axis. The connection of the second pole face to the magnetic circuit may be offset relative to a centre of the measurement volume along the second axis.

The first pole face may be connected to the magnetic circuit by a first connecting portion which extends away from the gap along the third axis. The first connecting portion may have a width extending along at least a portion of the width of the first pole face parallel to the second axis. Additionally or alternatively, the second pole face may be connected to the magnetic circuit by a second connecting portion which extends away from the gap along the third axis. The second connecting portion may have a width extending along at least a portion of the width of the second pole face parallel to the second axis.

The width of the first connecting portion may be a fraction of the width of the first pole face. The fraction may be less than or equal to 90%. The fraction may be less than or equal to 80%. The fraction may be less than or equal to 75%. The fraction may be less than or equal to 60%. The fraction may be between 50 and 60% (inclusive of endpoints). The width of the second connecting portion may be a fraction of the width of the second pole face. The fraction may be less than or equal to 90%. The fraction may be less than or equal to 80%. The fraction may be less than or equal to 75%. The fraction may be less than or equal to 60%. The fraction may be between 50 and 60% (inclusive of endpoints

The first connecting portion and first pole face may both be provided by the first pole piece. The first connecting portion and first pole face may be formed by shaping and bending/folding one or more pieces of sheet material (for example sheet metal).

The second connecting portion and second pole face may both be provided by the first pole piece. The second connecting portion and second pole face may be formed by shaping and bending/folding one or more pieces of sheet material (for example sheet metal).

The first connecting portion may include one or more cut-outs. The second connecting portion may include one or more cut-outs.

One, some or all of the cut-outs of the first connecting portion may extend to an edge of the first connecting portion. One, some or all of the cut-outs of the first connecting portion may be wholly contained within a perimeter of the first connecting portion. One, some or all of the cut-outs of the first connecting portion may extend partway through a thickness of the first connecting portion. One, some or all of the cut-outs of the first connecting portion may extend entirely through a thickness of the first connecting portion. One, some or all of the cut-outs of the first connecting portion may have a rectilinear shape. Additionally or alternatively, one, some or all of the cut-outs of the first connecting portion may have curved edges, or a combination of curved and rectilinear shapes.

One, some or all of the cut-outs of the second connecting portion may extend to an edge of the second connecting portion. One, some or all of the cut-outs of the second connecting portion may be wholly contained within a perimeter of the second connecting portion. One, some or all of the cut-outs of the second connecting portion may extend partway through a thickness of the second connecting portion. One, some or all of the cut-outs of the second connecting portion may extend entirely through a thickness of the second connecting portion. One, some or all of the cut-outs of the second connecting portion may have a rectilinear shape. Additionally or alternatively, one, some or all of the cut-outs of the second connecting portion may have curved edges, or a combination of curved and rectilinear shapes.

Cut-outs of the first and/or second connecting portions may be arranged to increase the reluctance of closed loops which intersect at least the central portion of the measurement volume closer to the coil to be more similar to the reluctance of closed loops which intersect the measurement volume further from the coil.

The electromagnetic flow sensor may form at least a part of a full-bore electromagnetic flowmeter. A full-bore electromagnetic flowmeter may sample the flow across an entire cross section of the flow tube. Alternatively, the electromagnetic flow sensor may form at least a part of an insertion type electromagnetic flowmeter, which samples the flow across a portion of the flow tube.

The electromagnetic flow sensor may be used with a variety of sizes of flow tubes. For example, an internal bore diameter of the flow tube can be between about 12 mm (~½") and 51 mm (~2"), but may be smaller or larger depending on the specific application.

The measurement volume may be arranged in a region of a flow tube having a narrower diameter than the regions either side of it. In this way, the flow rate through the measurement volume can be increased.

Each of the first and second electrodes may have a diameter between about 2 mm and about 10 mm. Each of the first and second electrodes may have a diameter between about 3 mm and about 6 mm. Each of the first and second electrodes may have a diameter between about 4 mm and about 5 mm. In reference to a dimension, the term "about" may correspond to a tolerance of $\pm 0.5$ mm. The first and second electrodes may be of different sizes. The first and second electrodes may be of the same size.

The electromagnetic flow sensor may include one or more controllers, microcontrollers, processors, field programmable gate arrays (FPGAs), which may be configured to control energisation of the coil and/or measurements of a fluid flow rate based on a voltage difference measured between the first and second electrodes.

Instead of focussing on the central portion, any of the features of the electromagnetic flow sensor described herein may be configured to enhance uniformity of magnetic field within the full width of the measurement volume parallel to the second axis.

According to a second aspect of the invention, there is provided a method including using the electromagnetic flow sensor of the first aspect to meter a flow of fluid through the flow tube.

The method of using the electromagnetic flow sensor may include features corresponding to any features of the electromagnetic flow sensor of the first aspect. Definitions applicable to the electromagnetic flow sensor of the first aspect (or features thereof) may be equally applicable to the method of using the electromagnetic flow sensor (or features thereof).

The fluid may be water. The fluid may be potable water. The fluid may be waste water. The fluid may be irrigation water.

According to a third aspect of the present invention there is provided an electromagnetic flow sensor. The electromagnetic flow sensor includes a body or frame, a fluid flow channel through the body or frame, a part of a magnetic circuit, supported by the body or frame, for directing a magnetic field across the passage, and at least first and second electrodes supported by the body or frame.

Thus, the electromagnetic flow sensor may be used in a variety of sizes of flow tubes. The flow tube need not be made from insulating and/or non-magnetic materials, since the electrodes are disposed on an insulating substrate, and the magnetic field is applied to a space within the flow tube. The sensor may be easier to seal. The frame may be included (e.g. housed) or attached to (e.g. depend from) a body. The body may be substantially cylindrical.

The magnetic circuit part may include first and second pole pieces disposed on opposite sides of the passage or portion of the passage. The magnetic circuit part may include first and second elements (e.g. sheets or pieces) of soft magnetic material. The sensor may include an electromagnetic coil arranged to generate magnetic field in the magnetic circuit.

The electromagnetic flow sensor of the third aspect may include features corresponding to any features of the electromagnetic flow sensor of the first aspect. Definitions applicable to the electromagnetic flow sensor of the first aspect (or features thereof) may be equally applicable to the electromagnetic flow sensor of the third aspect (or features thereof). Features of the electromagnetic flow sensor of the third aspect may be used in the electromagnetic flow sensor of the first aspect.

According to a fourth aspect of the invention, there is provided an electromagnetic sensor for the measurement of the flow of conductive fluids. The electromagnetic sensor includes a flow tube with a flow measurement section, with a first longitudinal axis parallel to the fluid flow direction, a second axis transverse to the flow direction and a third axis normal to both first and second axes. The electromagnetic sensor also includes a magnetic field generator, such as a coil. The electromagnetic sensor includes a magnetic circuit directing magnetic field parallel to the third axis of the flow tube. The magnetic circuit includes at least 2 pole-pieces constructed from a sheet material. Each pole piece may have a pole face lying in a plane normal to the first axis and the pole faces of the pole pieces oppose one another across the measurement volume. The electromagnetic sensor also includes first and second electrodes arranged along the second axis to sense a voltage generated in response to a conductive fluid flowing within the measurement section. The geometry of the magnetic circuit is arranged to provide a substantially uniform magnetic field in the measurement section of the flow tube.

The electromagnetic flow sensor of the fourth aspect may include features corresponding to any features of the electromagnetic flow sensors of the first and/or third aspects. Definitions applicable to the electromagnetic flow sensors of the first and/or third aspects (or features thereof) may be equally applicable to the electromagnetic flow sensor of the fourth aspect (or features thereof). Features of the electromagnetic flow sensor of the fourth aspect may be used in the electromagnetic flow sensors of the first and/or third aspects.

The pole pieces may include cut-outs in the sheet material of the magnetic circuit directed towards achieving a substantially uniform magnetic field symmetric about the third axis of the flow tube.

The electromagnetic flow sensor may include overhangs of the pole pieces along the second axis relative to the extent along that axis of the measurement section. The overhangs may be asymmetric with respect to the third axis of the flow tube.

The pole pieces may be constructed (wholly or partly) from magnetically permeable material.

The magnetic circuit may also include a remanent magnetic material.

**Brief Description of the Drawings**

Embodiments of the invention will now be described, by way of example, with reference to the accompanying drawings in which:

Figure 1 schematically illustrates an electromagnetic flow sensor;
Figure 2 schematically illustrates a first reference magnetic circuit for an electromagnetic flow sensor;

Figure 3A shows a schematic cross section of a flow tube for an electromagnetic flow sensor;

Figure 3B shows a view of the flow tube shown in Figure 3A along an axis of fluid flow;

Figure 4 plots modelled contours of normalised magnetic flux density corresponding to the first reference magnetic circuit shown in Figure 2;

Figure 5 schematically illustrates a setter device into which an electromagnetic flow sensor may be installed;

Figure 6 is a schematic block diagram of an electromagnetic flow sensor;

Figure 7A is a schematic projection view of a second reference magnetic circuit, Figure 7B is a schematic plan view of the second reference magnetic circuit and Figure 7C is a schematic plan view of a sheet material component which may be folded to form the pole pieces of the second reference magnetic circuit;

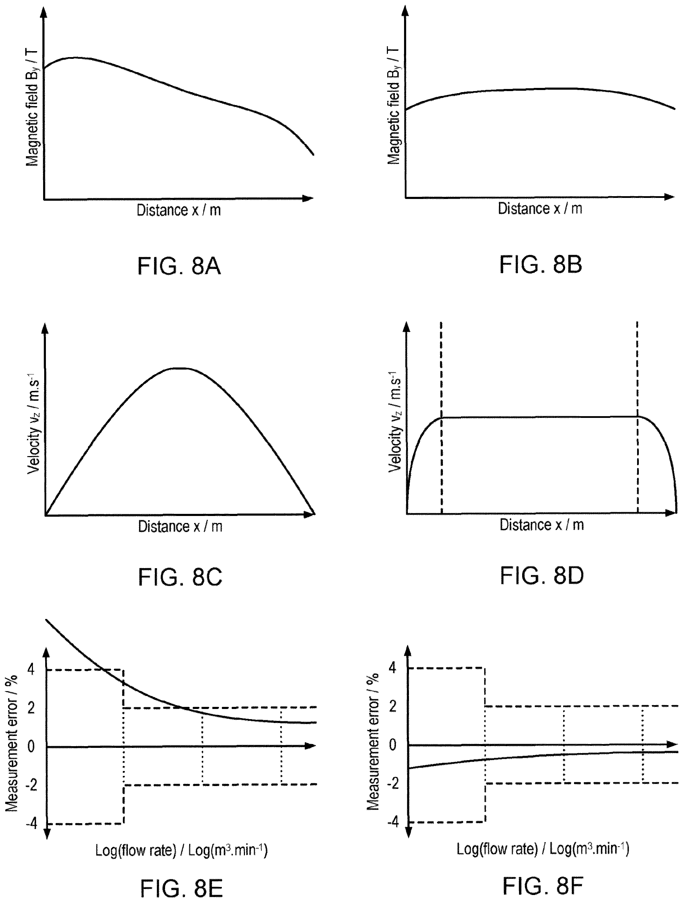

Figure 8A schematically illustrates a non-uniform magnetic field profile, Figure 8B schematically illustrates a magnetic field profile having improved uniformity, Figure 8C schematically illustrates flow velocity profile corresponding to laminar flow, Figure 8D schematically illustrates a flow velocity profile corresponding to turbulent flow, Figure 8E schematically illustrates variability of measurement error with flow rate for a non-uniform magnetic field (as shown in Figure 8A), and Figure 8E schematically illustrates variability of measurement error with flow rate for a more uniform magnetic field (as shown in Figure 8B);

Figure 9A is a schematic projection view of a first improved magnetic circuit, Figure 9B is a schematic plan view of the first improved magnetic circuit, Figure 9C is a schematic side view of the first improved magnetic circuit, and Figure 9D is a schematic plan view of a sheet material component which may be folded to form the pole pieces of the first improved magnetic circuit;

Figure 10A is the same as Figure 4, Figure 10B shows modelled contours of normalised magnetic flux density for the first improved magnetic circuit, and Figure 10B shows modelled contours of normalised magnetic flux density for an improved magnetic circuit corresponding to omitting cut-outs from the first improved magnetic circuit;

Figure 11A is a schematic projection view of a second improved magnetic circuit, Figure 11B is a schematic plan view of the second improved magnetic circuit, Figures 11C and 11D are schematic side views of the second improved magnetic circuit along different axes, Figure 11E is a schematic projection view of a pole piece of the second improved magnetic circuit, and Figure 11F is a schematic plan view of a sheet material component which may be folded to form the pole pieces of the second improved magnetic circuit;

Figure 12 plots modelled streamlines of magnetic flux for a section through the second improved magnetic circuit;

Figure 13A plots a comparison of modelled magnetic field profiles along a line for the second reference magnetic circuit and the second improved magnetic circuit, Figure 13B plots the magnetic field profile for the second reference magnetic circuit folded back on itself around a midpoint of the measurement volume, and Figure 13C plots the magnetic field profile for the second improved magnetic circuit folded back on itself around the midpoint;

Figure 14 schematically illustrates a single-piece magnetic circuit;

Figure 15 schematically illustrates a two-piece magnetic circuit;

Figure 16 schematically illustrates a three-piece magnetic circuit;

Figure 17A is a schematic plan view of a first exemplary pole face, Figure 17B is a schematic plan view of a second exemplary pole face, Figure 17C is a schematic plan view of a third exemplary pole face, and Figure 17C is a schematic plan view of a fourth exemplary pole face;

Figure 18A is a schematic plan view of a fifth exemplary pole face, Figure 18B is a schematic plan view of a sixth exemplary pole face, and Figure 18C is a schematic plan view of a seventh exemplary pole face; and

Figure 19A is a schematic side view of a first exemplary connecting portion, Figure 19B is a schematic side view of a second exemplary connecting portion, Figure 19C is a schematic side view of a third exemplary connecting portion, and Figure 19D is a schematic side view of a fourth exemplary connecting portion.

## Detailed description

Where any or all of the terms "comprise", "comprises", "comprised" or "comprising" are used in this specification (including the claims) they are to be interpreted as specifying the presence of the stated features, integers, steps or components, but not precluding the presence of one or more other features, integers, steps or components.

In the following, the same or similar parts are denoted using the same or similar reference numerals.

The Continuous charge distribution expression of the Lorentz force equation

Lorentz force has many device applications such as Loudspeakers and microphones, cathode ray tubes, linear motors and electrical machines. Herein, the application is to measuring flow rates of conductive fluids, for example water.

Herein, magnetic field $\mathbf{B}$ is measured in Tesla, T, unless explicitly stated to the contrary.

A flow of conductive fluid with charge density $\rho$ can be considered a continuous charge distribution in motion with velocity $\mathbf{v}$. When exposed to a magnetic field $\mathbf{B}$, the flow of conductive fluid is subject to a Lorentz force $\mathbf{f}$ and sets

up an electric field **E** according to the continuous charge distribution expression of the Lorentz force, which sums to zero:

$$\underline{\mathbf{f}} = \rho\underline{\mathbf{E}} + \underline{\mathbf{J}} \times \underline{\mathbf{B}}$$

(1)

In a static condition the electric and magnetic forces are balanced, so by measuring the generated electric potential $\varphi$ normal to the flow direction, the flow velocity **v** can be measured directly. The total force **F** is the volume integral over the charge distribution:

$$\underline{\mathbf{F}} = \int \int \int \left(\rho\underline{\mathbf{E}} + \underline{\mathbf{J}} \times \underline{\mathbf{B}}\right) dV$$

(2)

By inspecting these governing equations for the resultant electric field **E**, a characteristic of the applied magnetic field **B** is that its effect sums over the velocity field **v**, creating a resultant electric field **E** such that the total force **F** is zero.

In the practical application of this equation to volumetric measurement, the scalar equation derived from Equation (2) for an electromagnetic meter operating using this principle is:

$$E = k \cdot B \cdot D \cdot v$$

(3)

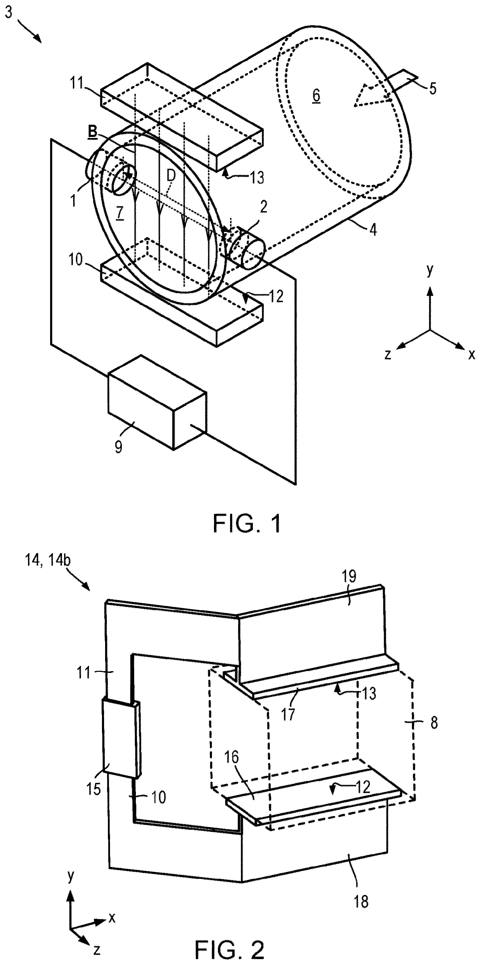

In which $E$ is the magnitude of electric field **E** (presumed uniform), $k$ is a constant of proportionality also referred to as a "meter factor", $B$ is the magnitude $|\mathbf{B}|$ of the magnetic field **B** (presumed uniform and perpendicular to $E$), $D$ is the separation of measurement electrodes 1, 2 (Figure 1) perpendicular to the magnetic field **B** and $v$ is the flow speed.

Equation (3) contains a simplification of the vector sum relationship which ignores the fact that **B**-field and velocity **v** are spatially varying vector quantities. Condensing both these fields **B**, **v** to scalar quantities leads to inaccuracies when either or both of the magnetic field **B** and the velocity field **v** departs from uniformity. As explained hereinafter, in practice either or both may be non-uniform. However, some assumption is needed because it is not practical to map out in detail the spatially varying magnetic field **B** and velocity **v** field for every possible combination of meter installation location and flow rate (volume/mass flowing past a point per unit time). Examples described herein may be used to obtain improved accuracy by reducing, or even removing, inaccuracies relating to non-uniformity of the magnetic field **B** in an electromagnetic meter. In other words, improving the uniformity of the magnetic field **B** in a meter makes Equation (3) a better model of the physics of that meter.

Although highly purified distilled water is an insulator, in practice most water including potable water, waste water, water used for irrigation etc, includes enough impurities (for example dissolved salts) to be sufficiently conductive for generation of a measurable potential difference $\varphi$ due to the Lorentz electric field **E**.

Referring also to Figure 1, an electromagnetic flow sensor 3 is shown.

The general principles of operation of the flow sensor 3 are well known to skilled persons, and have been briefly summarised hereinbefore.

The electromagnetic flow sensor 3 (hereinafter "sensor") include a flow tube 4 for passing a flow 5 of conductive fluid such as water from an 6 to an outlet 7. The flow tube 4 may be of generally constant cross-section as illustrated in Figure 1 (generally cylindrical as an example). However, preferably the flow tube 4 may be arranged advantageously to accelerate the flow 5 of fluid through a measurement volume 8 (Figure 2) in between the inlet 6 and outlet 7 to increase the flow speed v of the fluid and hence the signal from the sensor 3.

The flow tube 4 extends parallel to a first axis ($z$ as illustrated), and first 1 and second 2 electrodes are spaced apart along a second axis ($x$ as illustrated) generally transverse (perpendicular as illustrated) to the first axis $z$. The electrodes 1, 2 are preferably of equal areas and arranged with their respective centres arranged to be colinear along a line parallel to the second axis $x$. A magnetic field **B** is applied generally along a third axis ($y$ as illustrated) that is mutually transverse (mutually perpendicular as illustrated) to the first $z$ and second $x$ axes. This configuration leads to separation of charges by the Lorentz force (as discussed hereinbefore) and measurement electronics 9 connected to the first and second electrodes 1, 2 detect the resulting potential $\varphi$ which is related to the flow speed $\upsilon$ (and hence via calibration to a flow rate).

In the illustration of Figure 1, the magnetic field **B** is applied from first 10 and second 11 pole pieces having respective first 12 and second 13 pole faces defining a gap which contains the flow tube 4.

To avoid shorting out the potential difference $\varphi$ from the sensor 3, the surfaces of the flow tube 4 in the vicinity of the measurement volume 8 (Figure 2) that are exposed to the fluid need to be insulating.

Referring also to Figure 2, the first and second pole pieces 10, 11 are generally connected by a magnetic circuit 14. The shaped of the magnetic circuit 14 shown in Figure 2 provides a first reference magnetic circuit 14b which shall be referred to in comparisons to improved magnetic circuits 14 described hereinafter. The first reference magnetic circuit 14b includes a magnetic field generator 15, for example a coil. The magnetic field generator 15 may be controlled by the measurement electronics 9, or may be controlled separately in coordination with the measurement electronics 9. The first reference magnetic circuit 14b (and magnetic circuits 14 in general) should also be electrically insulated from the fluid to prevent interference with the measurement of the potential difference $\varphi$.

In the example shown in Figure 1, this is achieved by having the pole faces 12, 13 disposed outside the insulating flow tube 4. Alternatively, such insulation may be locally applied to the pole pieces 10, 11, or may be formed by one or more separate insulating components, or formed by any other suitable means without limitation.

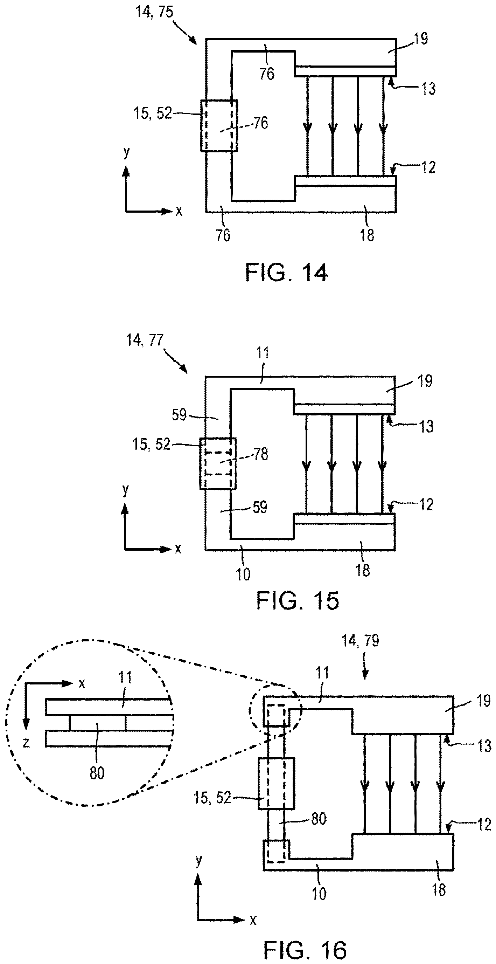

The first reference magnetic circuit 14b shown in Figure 2 is generally C-shaped, with the first and second pole faces 12, 13 provided by the inwardly facing surfaces of first 16 and second 17 plates formed of sheet material and connected to the magnetic circuit by respective connecting portions 18, 19. The magnetic field **B** is guided by soft magnetic materials (the pole pieces 10, 11) from the generating means 15 to substantially planar pole faces 12, 13 on either side of the measurement volume 8. Although shown in Figure 2 as separate pole pieces 10, 11 joined or overlapped at the magnetic field generator 15, in other examples the first reference magnetic circuit 14b may be provided by a single, C-shaped pole piece (see also Figures 14 to 16 and corresponding descriptions).

The magnetic circuit 14 may be supported by a frame or support (not shown) formed from a non-magnetic material such as a polymeric material. The frame or support may secure the parts of the magnetic circuit 14 relative to one another and/or the flow tube 4.

The measurement volume 8 is defined width-wise (parallel to the second axis $x$) by the bounds of the flow tube 4, i.e. the width $D$. Due to spreading of the magnetic field **B** across the gap between pole faces 12, 13, the length of the measurement volume 8 parallel to the first axis $z$ is generally longer than the length of the pole faces 12, 13, typically about double the length of the pole faces 12, 13 parallel to the first axis $z$.

The magnetic field **B** may be generated by a variety of means. This might include current passing through a coil, or residual magnetism from a semi-hard magnetic material. The polarity of the magnetic field **B** may be reversed periodically to enable the sensor 3 to generate a periodically reversing AC potential difference $\varphi$ whose amplitude is proportional to the field amplitude multiplied by the flow speed $v$, potentially improving the performance of the sensor at lower volumetric flow rates.

The sensor 3 may be manufactured using the methods, materials and/or structures of WO 2018/138518 A1, the entire contents of which are herein incorporated by this reference.

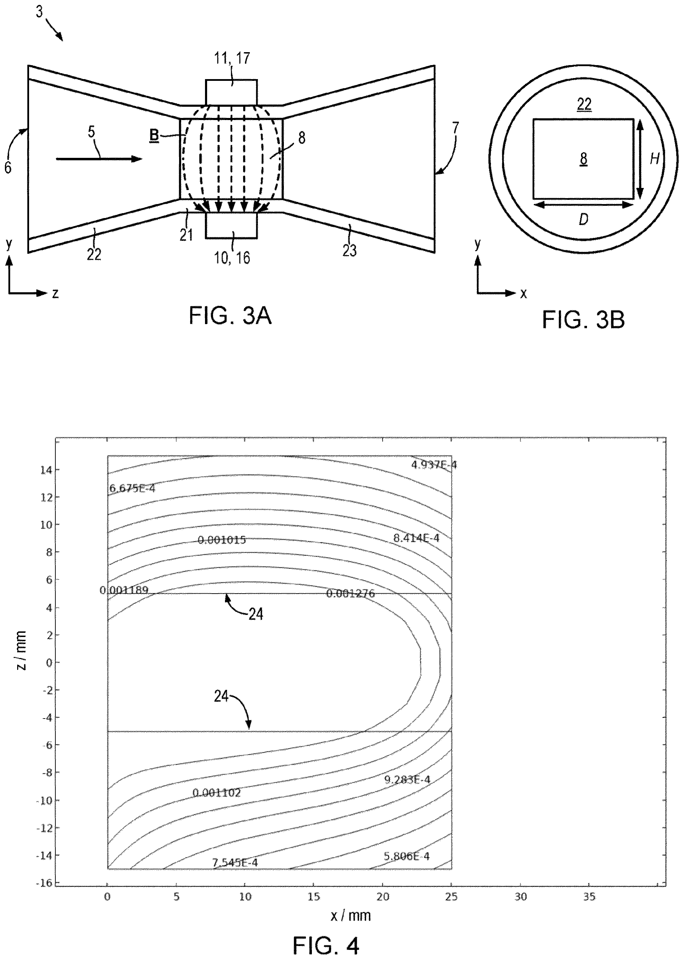

Referring also to Figures 3A and 3B, a profile of the flow tube 4 through the measurement volume 8 is shown. Figure 3A shows a cross-section parallel to the first axis $z$, and Figure 3B shows a view along the first axis $z$ (in the positive direction).

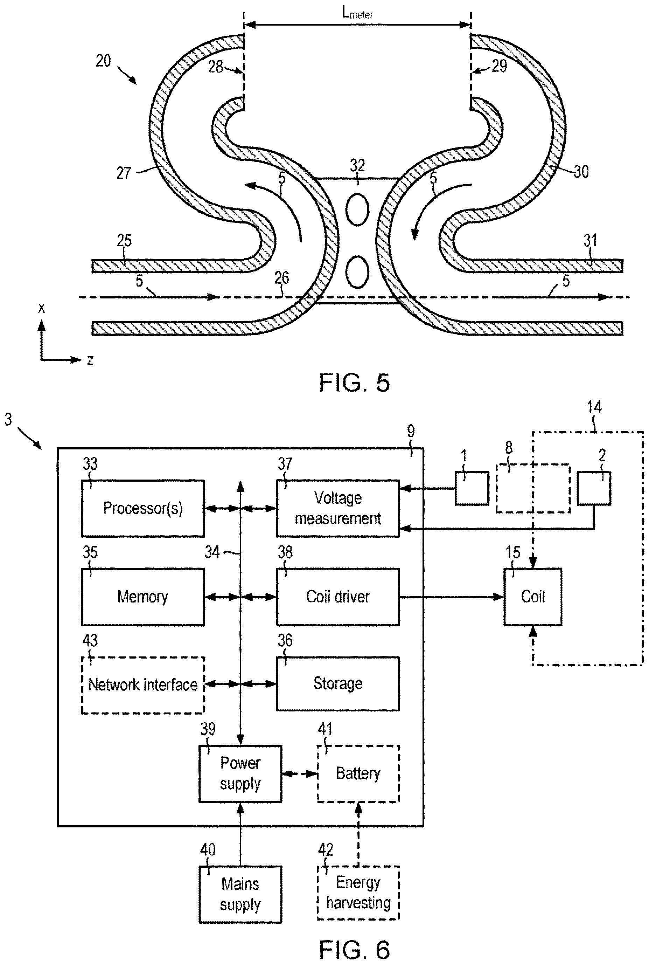

The inlet 6 and outlet 7 are circular in cross-section for smooth mating with inbound and outgoing pipe sections (not shown) or a setter 20 (Figure 6). In between, a constricted section 21 has a rectangular cross-section and generally corresponds to the measurement volume 8. A rectangular shape is not essential, though it does help to simplify the volume integral of Equation (2) so as to better correspond to the meter Equation (3). A tapering section 22 connects the inlet 6 to the constricted section 21, and a flared section 23 connected the constricted section 21 to the outlet 7.

As the fluid flow 5 enters the inlet 6, it is accelerated through the tapering section 22 to increase the flow speed $v$ through the measurement section 8. This increases the size of the signal $\varphi$ for detection using the electrodes 1, 2. Preferably, a width $D$ of the measurement volume 8 (corresponding to separation of the electrodes 1, 2) is as large as possible, meaning that a height $H$ parallel to the third axis $y$ may be reduced preferentially. Reduced height $H$, being parallel to the magnetic field $\underline{\mathbf{B}}$, is also preferable to keep the magnetic field $\underline{\mathbf{B}}$ focussed within the desired measurement volume 8.

Referring also to Figure 4, modelled contours of normalised magnetic flux density $B_y$ in tesla (T) are shown for a cross-section perpendicular to the third axis $y$ and positioned midway between the first 12 and second 13 pole faces of the first reference magnetic circuit 14b shown in Figure 2. The projected outline 24 of the pole faces 12, 13 is superposed for reference.

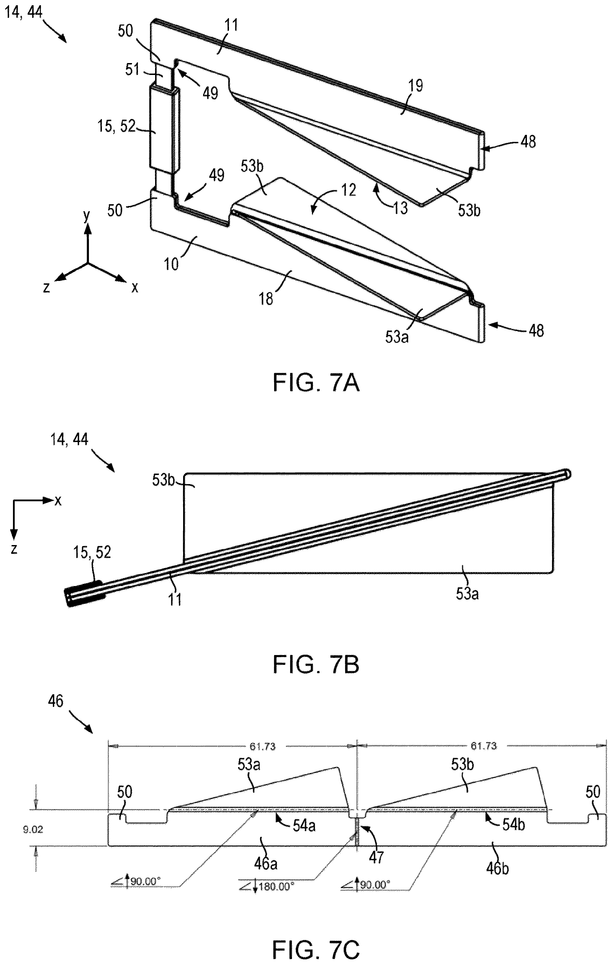

The magnetic field **B** was modelled using finite element analysis. A model of the first reference magnetic circuit 14b and the immediate environment were produced. Modelling was conducted using a commercially available software package (COMSOL Multiphysics (RTM)). The geometry of the first reference magnetic circuit 14b modelled to generate the data of Figure 4 is shown in greater detail in Figure 2. In terms of the material parameters, the pole pieces 10, 11 were modelled as soft steel with a magnetic permeability of $\mu = 1000$. Although the first reference magnetic circuit 14b does not include remanent material, instead of modelling the magnetic field generator 15, a remanent strip 51 (for example as shown in Figure 7A) was modelled connecting the pole pieces 10, 11, in the form of a hard magnetic material with a remnant flux density of $|\underline{B}| = 1$ T directed along the third axis withing the hard magnetic material.

Other volumes were modelled as having a magnetic permeability of $\mu = 1$. Only magnetic physics was considered for this modelling.

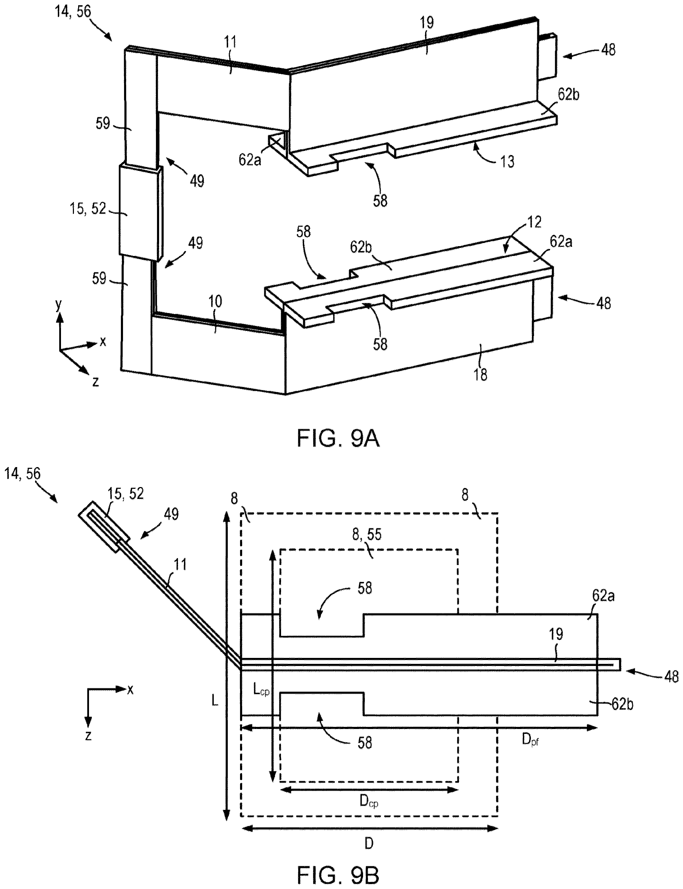

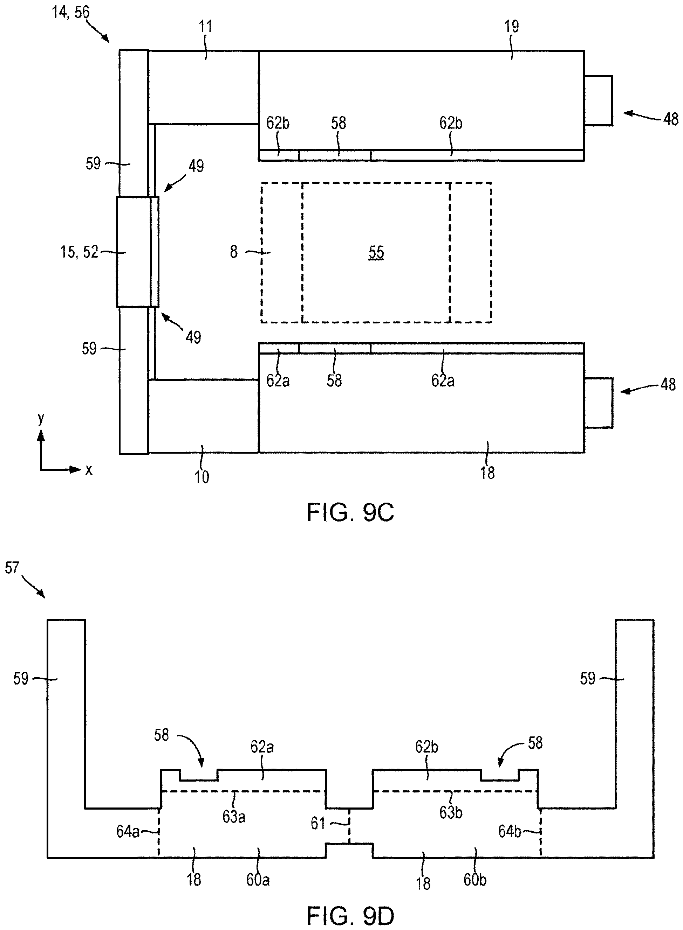

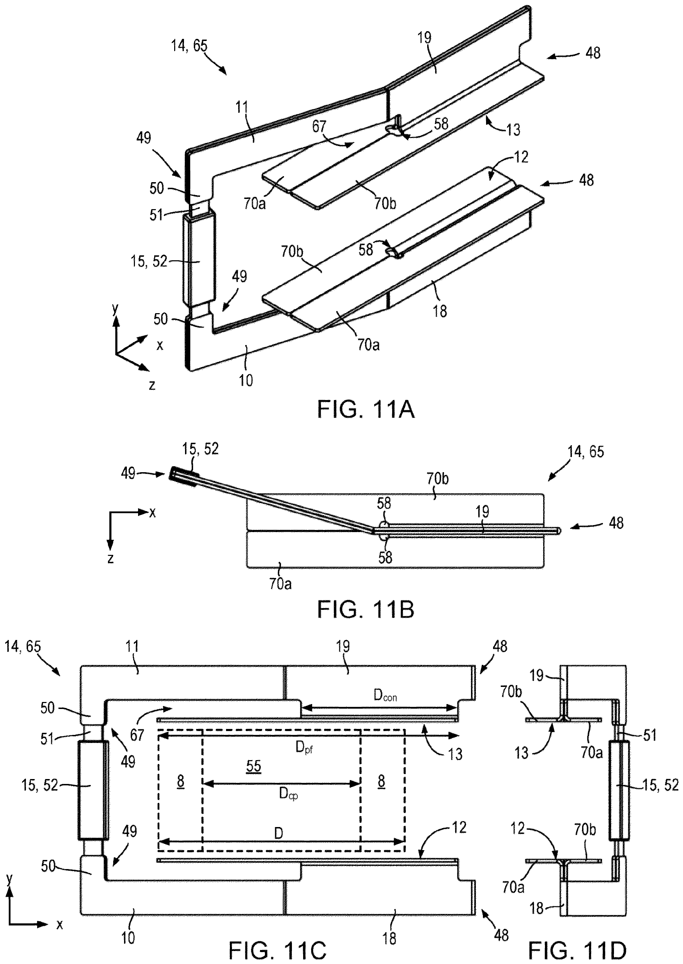

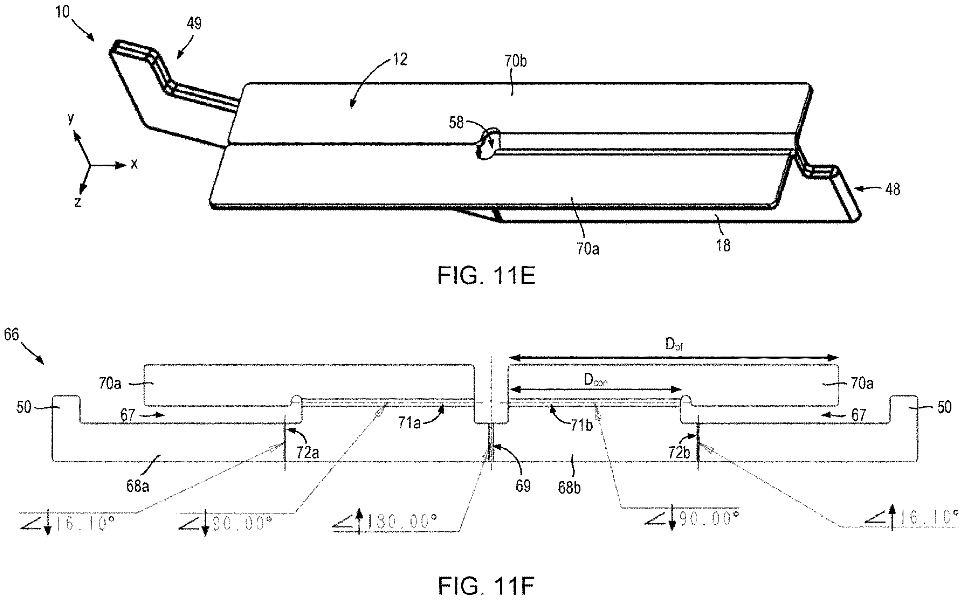

This model was subsequently modified and iterated to optimise the shape of the magnetic circuit 14, for example pole faces 12, 13, in order to obtain improved magnetic field $\underline{B}$ uniformity within the measurement volume 8. Two possible results of this optimisation are described hereinafter with reference to Figures 9 and 11.

The direction of decreasing $x$ in Figure 4 is the side on which the first reference magnetic circuit 14 is completed via magnetic field generator 15. It may be observed that the magnetic field $\underline{B}$ is concentrated on the side towards the magnetic field generator 15.

Without wishing to be bound by theory, this may be considered within the framework of the magnetic reluctance model, which draws an analogy between magnetic circuits and electrical resistance. The analogy is not precise, since magnetic field $\underline{B}$ may leak from a magnetic circuit 14 (i.e. it is not conserved about the circuit 14). The analogy is sufficient to understand the non-uniformity observed in the modelled contours of Figure 4. The air gap reluctance appears as a significant term in the magnetic circuit 14 reluctance sum. Whilst field uniformity in the air gap depends to a great extent of parallelism of the pole faces 12, 13, there is also a dependence on distance across the pole faces 12, 13 moving away from the magnetic generator 15. This is due to the non-negligible difference in reluctance for loops passing through, for example, $x = 25$ mm compared to $x = 0$ mm.

A given arrangement of magnetic circuit 14 and pole faces 12, 13 may be calibrated for when the flow velocity field $\underline{v}$ is known and reproducible, for example via meter factor k in Equation (3). In principle, if the sensor 3 could be placed in a sufficiently long, straight, section of pipe, the flow velocity field $\underline{v}$ would be known and reproducible. In practice, this is generally not possible, and the flow velocity field $\underline{v}$ may be disturbed from that of a long straight pipe due to bends and/or obstructions in before the inlet 6 and/or following the outlet 7 (or vice versa, as some meters may need to operate bidirectionally). Bends and/or obstructions may introduce asymmetries and/or swirl in to the flow velocity field $\underline{v}$. Calibration to account for non-uniform magnetic field $\underline{B}$ may actually compound inaccuracies resulting from certain disturbances from a flow velocity field $\underline{v}$ used for calibrating the sensor 3.

For example, referring also to Figure 5, a setter device 20 is shown.

Fluid flow 5 enters the setter 20 from an inbound pipe section 25 along a reference axis 26, before being diverted off the reference axis 26 by a first S-shaped section 27 which terminates in a setter outlet 28. The setter outlet 28 is separated from a setter inlet 29 by a distance $L_{meter}$. From setter inlet 29 the fluid flow 5 is diverted by second S-shaped section 30 back to flow along the reference axis 26 through outbound pipe section 31. The S-shaped sections 27, 30 may be held rigidly relative to one another by a support structure 32 connecting between them. A meter, for example electromagnetic flow sensor 3, is installed between the setter inlet 28 and outlet 29 to measure flow rates of the fluid. The advantage of using a device such as the setter 20 is that a meter may be more easily accessed for servicing, reading and/or replacement, for example by bringing the meter location closer to the surface when inbound 25 and outbound 31 pipes are buried underground.

Even if a setter 20 is not used, locations for installing a fluid flow meter are often relatively compact and close to one or more bends and/or obstructions shortly before or after the meter location.

It has been suggested to use so called "flow conditioner" devices to force the flow velocity field $\underline{v}$ to adopt a known profile immediately before entering a meter. However, this approach may lead to significant pressure drops, and many flow conditioner designs may be subject to elevated risks of clogging if any debris/particles are entrained in the fluid flow 5. Additionally, a flow conditioner may be needed on both sides of a meter to support bi-directional operability.

The examples explained in this specification take a different approach, and seek to improve uniformity of the magnetic field $\underline{B}$ through the measurement volume, and in particular across the section corresponding to the electrodes 1, 2. In this way, sensitivity to disturbances in a flow velocity field $\underline{v}$ may be reduced.

A sensor 3 may include one or more controllers, microcontrollers, processors, field programmable gate arrays (FPGAs), which may be configured to control energisation of the magnetic field generator 15 and/or measurements of a fluid flow rate based on a voltage difference $\varphi$ measured between the first 1 and second 2 electrodes.

For example, referring also to Figure 6, a block diagram of an exemplary sensor 3 is shown.

The measurement electronics 9 include one or more digital electronic processors 33 coupled by a bus 34 to volatile memory 35 and non-volatile storage 36. The processor(s) 33 execute programs stored by the non-volatile storage 36 to carry out the functions of controlling the magnetic field generator 15 and performing measurements of the potential difference $\varphi$ between the electrodes 1, 2. Generally and preferably, the processor(s) 33 will also convert the potential difference $\varphi$ to a flow rate value, for example using calibration factors stored by the non-volatile storage 36. When the sensor 3 is to function as a meter, the non-volatile storage 36 may also be used to store a time series of historic measurements and/or to track a total volume or mass or fluid passing through the flow tube 4 of the sensor 3.

The measurement electronics 9 also include a voltage measurement circuit 37 which is used to measure the potential difference $\varphi$ between the electrodes 1, 2. For example, the voltage measurement circuit 37 may include one or more amplifiers and/or analog-to-digital convertors (ADCs). The measurement electronics 9 also include a coil driver circuit 38 used to drive energisation of a magnetic field generator 15 in the form of a coil of wire wound about (or otherwise magnetically coupled to) the magnetic circuit 14. For example, the coil driver circuit 38 may directly drive the coil 15. However, if larger currents are needed, the coil driver circuit may control one or more relays, high power MOSFETs, or similar devices to modulate supply of current to the coil 15.

The measurement electronics 9 may be powered using a power supply unit 39 to convert a mains supply 40 to a suitable current and voltage for the electronics 9. Additionally or alternatively, the measurement electronics 9 may be configured to include or receive one or more battery(s) 41 to enable functioning when not connected to the mains supply 40. When a battery 41 is included, it may be rechargeable, either using the mains supply 40 converted by the power supply unit 39, or using one or more energy harvesting devices 42 such as solar panels (either directly or via power supply unit 39).

In some examples, the measurement electronics 9 may include a visible display of any known variety (for example liquid crystal), used to display one or more of a current flow rate, a total flow volume, and so forth. Additionally or alternatively, the measurement electronics 9 may also include a network interface 43 which may be used to output and/or query one or more measurements including, for example, a current flow rate, a total flow volume, and so forth. The network interface 43 may be wired, for example, via a USB-C port and protocol. Alternatively, the network interface 43 may be wireless, for either paired or unpaired communications. For example, the network interface 43 may take the form of a Bluetooth (RTM), a Radio Frequency Identification (FPID), or a IEEE 802.11 Wireless LAN (WLAN) connection.

When the battery 41 is used without a mains supply 40, the electromagnetic flow sensor 3 may be configured (controlled by the processor(s) 33 and coil driver 38) to periodically energise the coil 15 to maintain and/or reverse a magnetisation of one or more regions of remanent magnetic material 51 (Figure 7B) included in the magnetic circuit 14. The coil need only be energised to sustain the magnetic field **B** if no remanent material regions 51 (Figure 7B) are included. This may help to save power and extend battery 41 life and/or time between recharging (when battery 41 is rechargeable).

The measurement electronics 9 may be configured to vary the polarity of the applied magnetic field **B** at a regular low frequency in order to eliminate any persistent electrode 1, 2 drift offset voltage (for example due to electrochemical effects). This is possible in magnetic circuits with or without remanent magnetic materials.

The exemplary sensor 3 shown in Figure 6 is by way of example only, and alternative configurations are possible using, for example, controllers, microcontrollers, processors, field programmable gate arrays (FPGAs) and so forth.

The present specification concerns making adjustments to the structure of a magnetic circuit 14 so as to enhance the uniformity of a magnetic field **B** across the measurement volume 8, or at least a central portion 55 thereof (Figure 9B).

A first improved magnetic circuit 56 described hereinafter (see Figures 9A to 9D) is a modification of the first reference magnetic circuit 14b of Figure 2, permitting direct comparison.

Referring also to Figures 7A to 7C, in the following, a second reference magnetic circuit 44 is shown which is not configured according to the present teachings (similarly to the first reference magnetic circuit 14b). The second reference magnetic circuit 44 is an example of magnetic circuit 14. A second improved magnetic circuit 65 described hereinafter (see Figures 11A to 11F) is a modification of the second reference magnetic circuit 44 of Figure Figures 7A to 7C, permitting direct comparison.

Figure 7A is a projection view of the second reference magnetic circuit 44, Figure 78 is a top view, and Figure 7C is a plan view of a sheet material component 45 which is folded to form the first 10 and second 11 pole pieces of the reference magnetic circuit 44.

The sheet material component 45 includes first 46a and second 46b main portions separated by a first fold line 47 about which the component 45 is folded back on itself by 180°. When folded, the first fold line 47 provides a distal end 48 of the respective first or second pole piece 10, 11. At the outside ends of the sheet material component 45, which correspond to a proximal end 49 of the respective first or second pole piece 10, 11, tabs 50 are formed between which a strip of magnetic remanent material 51 is received. A magnetic field generator 15 in the form of a coil 52 is wound about the strip of magnetic remanent material 51. First 53a and second 53b flaps are separated from the respective main portions 46a, 46b of the sheet material component 45 by respective 90° fold lines 54a, 54b. The fold lines 54a, 54b are oriented at 90° to the fold line 47, and the flaps 53a, 53b are folded in the same sense relative to the respective main portion 46a, 46b so that the flaps 53a, 53b form a rectangular pole face 12, 13 of the respective pole piece 10, 11. The remainder of the main portions 46a, 46b form the respective connecting portion 18, 19, which extends across the entire diagonal of the corresponding pole face 12, 13.

Identical sheet material components 45 may be used to form both the first 10 and second 11 pole pieces by reversing the sense (e.g. clockwise to anti-clockwise) of folding about fold line 47, 54a, 54b.

This approach to forming the reference magnetic circuit 44 is simple to manufacture, for exampling using a stamping or die cutting process to form the sheet material components 45. However, the reference magnetic circuit 44 may be fabricated in any other way to provide the characteristic features of the rectangular pole faces 12, 13 having identical width *D* to the measurement volume, and the connecting portions 18, 19 extending diagonally across the faces 12, 13.

The reference magnetic circuit 44 may be supported by a frame or support (not shown) formed from a non-magnetic material such as a polymeric material. The frame or support may secure the parts of the reference magnetic circuit 44 relative to one another and/or the flow tube 4.

Comparison of measurement linearity with uniform and non-uniform magnetic field

Referring also to Figures 8A to 8F, the effects of uniform and non-uniform magnetic fields $\underline{\mathbf{B}}$ on measurement linearity using an electromagnetic flow sensor 3 are illustrated.

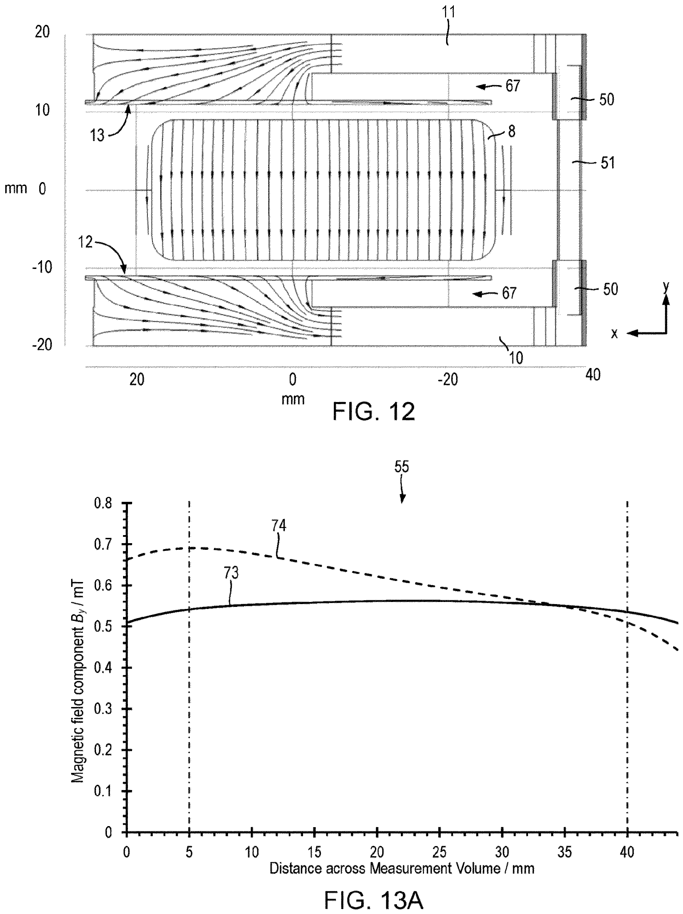

Figure 8A illustrates a non-uniform magnetic field $\underline{\mathbf{B}}$, and shows a profile of magnetic field component $B_y$ parallel to the third axis $y$ (equivalent to the component of magnetic flux density penetrating the plane perpendicular to the third axis $y$) for a line connecting the respective centres of the electrodes 1, 2. The shape of the illustrated profile is reproduced from the modelled profile 74 (Figure 13A) corresponding to the reference magnetic circuit 44 of Figures 7A to 7B, and is discussed in further detail hereinafter.

Figure 8B illustrates a magnetic field $\underline{\mathbf{B}}$ having improved uniformity, and shows a profile of magnetic field component $B_y$ parallel to the third axis $y$ for a line connecting the respective centres of the electrodes 1, 2. The shape of the illustrated profile is reproduced from the modelled profile 73 (Figure 13A) corresponding to the second magnetic circuit 65 shown in Figures 11A to 11E and discussed in further detail hereinafter.

Figure 8C schematically illustrates a flow profile across the width $D$ of the measurement volume 8 for the case of laminar flow (relatively lower volumetric flow rates). As the flow rate increases, the transition to turbulent flow occurs, which is schematically illustrated in Figure 8D with boundary layers indicated using vertical dashed lines.

It shall be apparent that evaluating the integral of Equation (2) for the magnetic field illustrated in Figure 8A will provide significantly different results for different velocity fields, for example as illustrated in Figures 8C and 8D, even without taking into account disturbances from ideal flow profiles. Consequently, use of the approximate meter Equation (3) may be calibrated for specific flow conditions, but may exceed permissible error margins under different, and in particular non-ideal, flow conditions. For example, as illustrated in Figure 8E, a meter having non-uniform magnetic field $\underline{\mathbf{B}}$ (Figure 8A) may be calibrated to exhibit acceptable measurement error (indicated by the dashed lines in Figure 8E) under relatively high volumetric flow rates, but may lose accuracy at lower flow rates.

In contrast to this, the more uniform magnetic field $\underline{\mathbf{B}}$ of Figure 8B ensures that the physical situation is a better analogy to the assumptions made in simplifying Equation (2) to derive Equation (3), resulting in reduced measurement errors as illustrated in Figure 8F (because the meter Equation (3) more accurately represents the physics in this case).

Improved magnetic circuits

In the first reference magnetic circuit 14 shown in Figure 2 and the second reference magnetic circuit 44 shown in Figures 7A and 7B, a single coil 15, 52 is placed to one side of the measurement volume 8. Having this single coil on one side creates an asymmetrical field in the gap between pole faces 12, 13, and in the leakage field around the gap. Although placement of a second coil in a symmetrical figure-of-eight (or closed) configuration could be considered, this would increase the overall size of the sensor 3 by an unacceptable amount. Additionally, using a pair of coils could shorten the lifetime for battery 41 powered devices.

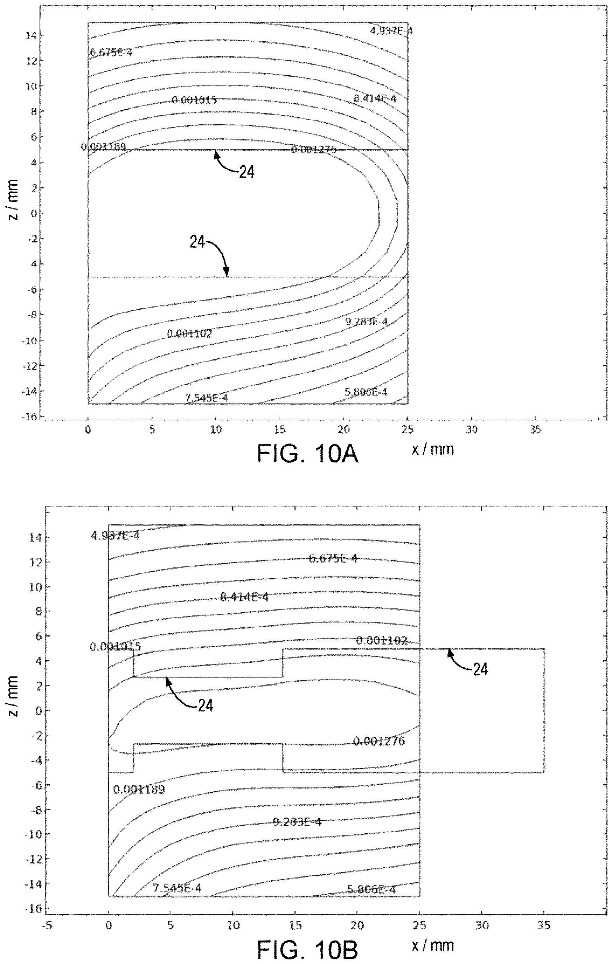

Instead, the inventors have determined that applying shape-controlled cut-outs and extensions to the pole pieces forming the magnetic circuit 14, it is possible to control the reluctance of the magnetic circuit 14 transverse to the principal magnetic field $\underline{\mathbf{B}}$ path, to apply a counteracting asymmetry. The elements of structural asymmetry applied in the magnetic circuit 14 (cut-outs and extensions) may be tuned to cancel out the inherent asymmetry provided by the single coil 15, 52 drive geometry. As shall be demonstrated (see Figures 10B, 10C and 12 to 13C), a surprising improvement of magnetic field $\underline{\mathbf{B}}$ uniformity and symmetry may be obtained and optimised by modifying the reference magnetic circuit 44 using cut-outs and/or extensions. The same principles may be extended to other approaches for optimising pole piece shapes (i.e. the inventive concept disclosed herein is not limited to only cut-outs and/or extensions).

The improved magnetic circuits described herein may be used with an electromagnetic flow sensor 3 as described herein, namely one which includes:

- A flow tube 4 extending along a first axis ($z$) and through which a fluid flow 5 is able to pass.
- First 1 and second 2 electrodes spaced apart along a second axis ($x$) transverse to the first axis ($z$) to span a measurement volume 8 within the flow tube 4.
- A magnetic circuit 14 comprising a coil 52 and a gap defined between first 12 and second 13 parallel pole faces. The flow tube 4 is received within the gap such that magnetic field $\underline{\mathbf{B}}$ about the magnetic circuit 14 is directed across the measurement volume 8 parallel to a third axis ($y$) transverse to the first ($z$) and second ($x$) axes.

The difference is that an improved magnetic circuit according to the present specification is shaped to enhance uniformity of magnetic field **B** within at least a central portion 55 (Figure 9B) of the measurement volume 8. Some specific examples of how to achieve the desired improvements in magnetic field **B** uniformity are discussed hereinafter. However, the present specification is not limited to these specific examples.

Magnetic field **B** will naturally concentrate along paths having minimum reluctance between exiting and re-entering the coil 52. In the reference magnetic circuit 44, these minimum reluctance paths will pass through portions of the first 12 and second 13 pole faces which are closer to the coil 52. The concept of the present specification is to shape the magnetic circuit 14 to re-distribute high reluctance materials (e.g. air/fluid) and low reluctance materials (e.g. soft iron), for example using cut-outs and/or extensions. In this way, the relative reluctances of closed paths passing through the measurement volume 8 (generally parallel to the third axis) may be made more similar across the width $D$ (parallel to the second axis $x$), and in so doing the uniformity of magnetic field **B** across the measurement volume 8 (or at least a central portion 55 thereof) may be improved. It shall be apparent that with the aid of computerised magnetic field simulations, this principles may be implemented using a wide variety of specific shapes of pole pieces 10, 11 and pole faces 12, 13.

The enhanced uniformity discussed herein corresponds to reduced variation in the magnitude $B_y$ of magnetic field **B** directed along the third axis $y$ when moving across at least the central portion 55 (Figure 9B) of the measurement volume 8 parallel to the second axis $x$. The magnetic field magnitude $B_y$ parallel to the third axis $y$ is preferably substantially uniform when moving across at least the central portion of the measurement volume parallel to the second axis $x$. As used herein, the term "substantially uniform" may correspond to a minimum value being greater than or equal to 80% of a maximum value. This condition may correspond to the whole of the central portion 55, but it need only apply to a line directed between the first 1 and second 2 electrodes as that line passes through the central portion 55 (Figure 9B) of the measurement volume 8.

In this way, the magnetic circuit 14 is shaped to reduce, or preferably minimise, a difference between a first magnetic field $B_y$ component parallel to the third axis $y$ at the first electrode 1 and a second magnetic field $B_y$ component parallel to the third axis $y$ at the second electrode 2. In other words, the magnetic circuit 14 is shaped so as to counteract an inherent asymmetry in the magnetic field **B** between the first 12 and second 13 pole faces arising from presence of the coil 52 on one side of the measurement volume 8 (relative to the second axis $x$).

Preferably, though not essentially, the magnetic field **B** is substantially symmetric about a plane perpendicular to the first axis $z$ and disposed at a midpoint of the measurement volume 8 (for example at $x = D/2$ if $x = 0$ corresponds to the start of the measurement volume). As used herein, the term "substantially symmetric" means that to a difference between a first magnetic field component $B_y(z_1)$ at a point $z_1$ and a second magnetic field component $B_y(z_2)$ at a corresponding point $z_2$ reflected about the plane perpendicular to the second axis $y$ being 10% or less than the larger of the first $B_y(z_1)$ and second $B_y(z_2)$ magnetic field components. The plane of substantial symmetry in this notation would corresponding to $z_m = (z_1 + z_2)/2$.

More preferably, the magnetic field component $B_y$ parallel to the third axis $y$ may be substantially uniform when moving across at least the central portion 55 (Figure 9B) of the measurement volume 8 parallel to the first axis $z$.

The magnetic circuit 14 may be generally C-shaped, with the first 12 and second 13 pole faces arranged at inward facing ends of the C-shaped magnetic circuit spanning the flow tube 4.

In addition to reduced sensitivity to flow velocity **v** profile disturbances, another objective for improving a flow sensor 3 is to improve the linearity of the electrode 1, 2, voltage response $\varphi$ to increasing volumetric flow rate. The solution presented herein to achieve improved uniformity of the magnetic field **B** in at least a central portion 55 (Figure 9B) of the measurement volume 8 may also achieve the characteristic of improved flow measurement linearity. Without wishing to be bound by theory, this is believed to be because the relationship between flow velocity **v** profile and flow measurement sensitivity is reduced or eliminated when the magnetic field **B** is made more uniform. Contrasting with the case of a non-uniform magnetic field **B** uniformity, flow measurement sensitivity depends on which parts of the cross-section are exposed to higher flows, a consideration which varies depending on the flow regime (laminar or turbulent, see Figures 8C and 8D). This may be observed in an improvement in the relationship between measurement error and flow rate, the registration curve.

Furthermore, the presently disclosed improvements to magnetic circuits 14 may additionally reduce sensitivity to manufacturing variability. For example, reduced sensitivity of the magnetic field **B** between the pole faces 12, 13 due to dimensional variations caused by misalignment and/or manufacturing defects such as dimensional or angular errors in construction of the magnetic circuit 14.

First improved magnetic circuit

Referring also to Figures 9A to 9D, a first improved magnetic circuit 56 (hereinafter the "first magnetic circuit") is shown.

The first magnetic circuit 56 is an example of a magnetic circuit 14, and represents an improvement compared to the first reference magnetic circuit 14b. Figure 9A shows a projection view, Figure 9B shows a plan view along the third axis $y$, and Figure 9C shows an end-on view along the first axis $z$. The measurement volume 8 and central portion 55 thereof are illustrated in Figures 98 and 9C. Figure 9D shows a plan view of a sheet material component 57 which may be folded to form the first 10 and second 11 pole pieces of the first magnetic circuit 56.

The first magnetic circuit 56 differs from the first reference magnetic circuit 14b in the following ways. Firstly, the pole faces 12, 13 each includes a pair of cut-outs 58. The cut-outs 58 are rectilinear and depend inward from the edges of the pole faces 12, 13 running parallel to the second axis $x$. The cut-outs 58 in the same face 12, 13 are aligned between the same positions on the second axis $x$, on opposite edges of the corresponding face 12, 13. The cut-outs in the first pole face 12 are coincident and coextensive with cut-outs in the second pole face 13.

Secondly, instead of having a width parallel to the second axis $x$ which is equal to the measurement volume 8, the pole faces 12, 13 are extended parallel to the second axis $x$ beyond the edge of the measurement volume 8 (in the positive $x$ direction as illustrated). In other words, the pole faces 12, 13 overhang (or equivalently are extensions relative to) the measurement volume 8. The extension corresponds to the difference $D_{pf} - D$ in width $D_{pf}$ of the pole faces 12, 13 and the width $D$ of the measurement volume 8.

The first and second pole pieces 10, 11 of the first magnetic circuit 56 have extended legs 59 which abut or overlap one another, with the coil 52 wound over the contacting/overlapping parts. One or more remanent material strips 51 may be sandwiched between the two parts of either or both legs 59. Alternatively, a pair of remanent material strips 51 may be placed either side of the legs 59, and the coil 52 wound about the strips 51. In other examples, the proximal ends 49 of the pole pieces 10, 11 may alternatively be configured in the same way as the reference magnetic circuit 44.

Similarly to the second reference magnetic circuit 44, the first magnetic circuit 56 is formed from sheet material (for example steel), by folding the sheet material component 57 shown in Figure 9D.

The sheet material component 57 includes first 60a and second 60b main portions separated by a first fold line 61 about which the component 45 is folded back on itself by 180°. When folded, the first fold line 61 provides a distal end 48 of the respective first or second pole piece 10, 11. At the outside ends of the sheet material component 57, which correspond to a proximal end 49 of the respective first or second pole piece 10, 11, the legs 59 are formed between which a strip of magnetic remanent material 51 is optionally received. A magnetic field generator 15 in the form of a coil 52 is wound about the contact, or preferably overlap, between the legs 52. First 62a and second 62b flaps are separated from the respective main portions 60a, 60b of the sheet material component 57 by respective 90° fold lines 63a, 63b. The fold lines 63a, 63b are oriented at 90° to the fold line 61, and the flaps 62a, 62b are folded in the same sense relative to the respective main portion 60a, 60b so that the flaps 62a, 62b form the pole face 12, 13 of the respective pole piece 10, 11. The remainder of the main portions 60a, 60b are folded along third fold lines 64a, 64b to form the respective connecting portion 18, 19, and the angled portion leading to the legs 59. The third fold lines 64a, 64b may be omitted, though the angling is preferable to reduce the total volume taken up by the first magnetic circuit 56.

Identical sheet material components 57 may be used to form both the first 10 and second 11 pole pieces by reversing the sense (e.g. clockwise to anti-clockwise) of folding about fold lines 61, 63a, 63b.

The cut-outs 58, and indeed the rest of the shape of the sheet material component 57 may be formed by a stamping or die cutting process. Alternatively, cut-outs and/or the sheet material component 57 may be formed by any suitable subtractive manufacturing process, for example cutting with a blade or saw, machining, drilling, chemical etching, or laser or water cutting.

Referring in particular to Figures 98 and 9C, to obtain improvements in sensing accuracy, it is enough to increase magnetic field $\underline{\mathbf{B}}$ uniformity across a central portion 55 of the measurement volume 8. This is in part because no-slip boundary conditions mean that there will be reduced flow rates near the boundaries of the flow tube 4, in both laminar or turbulent flow conditions. Typically, improved uniformity, for example substantial uniformity as described herein, need only be obtained across 70% or more of the width $D$ of the measurement volume 8. In other words, the width $D_{cp}$ of the central portion 55 may be $D_{cp} \geq 0.7D$. Preferably, the size of the central portion 55 across which enhanced uniformity is obtained should be as large as possible. As described herein, the condition of substantial uniformity need only be satisfied along the line connecting the first and second electrodes 1, 2, corresponding to a midpoint of the measurement volume 8 along the first axis $z$. However, it is preferable for the length $L_{CP}$ of the central portion 55 across which enhanced uniformity is obtained to be as large a fraction as possible of the length $L$ of the measurement volume 8. As described hereinbefore, the length $L$ of the measurement volume 8 is not, and need not be, precisely defined. At minimum, the length $L_{CP}$ of the central portion 55 could be as small as 1 mm, but preferably the length $L_{CP}$ will be larger, for example between half and twice the length of the pole faces 12, 13 parallel to the first axis.

Referring also to Figures 10A and 10B, a calculated comparison of contours of normalised magnetic flux density $B_y$ on a plane perpendicular to the third axis $y$ is presented between the first reference magnetic circuit 14b and the first magnetic circuit 56.

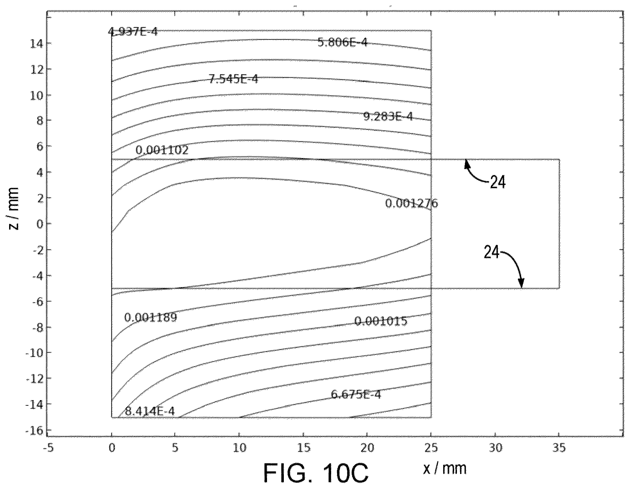

Figure 10A is the same as Figure 4, and is reproduced for ease of comparison to Figure 10B (and Figure 10C), which shows modelled contours of magnetic flux density $B_y$ in tesla (T) for a cross-section perpendicular to the third axis $y$ and positioned midway between the first 12 and second 13 pole faces of the first magnetic circuit 56 shown in Figures 9A to 9C. The projected outline 24 of the corresponding pole faces 12, 13 are superposed for reference in Figures 10A and 10B.

It may be observed that magnetic field **B** (as shown by the modelled contours) corresponding to the first magnetic circuit 56 have significantly enhanced uniformity across the width $D$ of the measurement volume 8, especially across the middle 70% or so of the width $D$. The combination of the cut-outs 58 from, and the extension $D_{pf}$ - $D$ of the pole faces 12, 13 act to relatively reduce the reluctance of paths passing through the measurement volume 8 further from the coil 52 (increasing $x$), leading to redistribution (relative to the reference example 44) of magnetic field **B** to be more even across the width $D$. The substantial symmetry of the magnetic field **B** along the first axis $z$ (shown by the modelled contours of magnetic flux density By on the plane perpendicular $y$) may be observed in both cases, especially across the middle 70% or so of the width $D$.

The first improved magnetic circuit 56 may be supported by a frame or support (not shown) formed from a non-magnetic material such as a polymeric material. The frame or support may secure the parts of the first improved magnetic circuit 56 relative to one another and/or the flow tube 4.

The first improved magnetic circuit 56 is only one example of implementing the present invention, and many other shapes can be used to obtain the re-distribution of material of the magnetic circuit 14 so as to provide enhanced uniformity. For example, referring also to Figure 10C, modelled contours of magnetic flux density $B_y$ in tesla (T) are shown for a modification of the first improved magnetic circuit 56 in which the cut-outs 58 are omitted 58, and only the width-wise extension is used (shown by the projection of pole faces 24).

It may be observed that whilst this configuration is not as uniform as the first improved magnetic circuit 56 including cut-outs 58, a significant improvement in uniformity may be obtained using only a width-wise extension of the pole faces 12, 13.

The shape changes of the first improved magnetic circuit 56 may equally be applied (with different optimisations such as specific dimensions) to the second reference magnetic circuit 44.

Second improved magnetic circuit

Referring also to Figures 11A to 11F, a second improved magnetic circuit 65 (hereinafter the "second magnetic circuit") is shown.

The second magnetic circuit 65 is an example of the magnetic circuit 14, and represents an improvement compared to the second reference magnetic circuit 44. Figure 11A shows a projection view, Figure 11B shows a plan view along the third axis $y$, Figure 11C shows an end-on view along the first axis $z$, and Figure 11D shows a side view along the second axis $x$. The measurement volume 8 and central portion 55 thereof are illustrated in Figure 11C. Figure 11E shows a projection view of the first pole piece 10 of the second magnetic circuit 65. Figure 11F shows a plan view of a sheet material component 66 which may be folded to form the first 10 and second 11 pole pieces of the second magnetic circuit 65.

The second magnetic circuit 65 differs from the second reference magnetic circuit 44 in the following ways. Firstly, the connection of the first pole face 12 to the rest of the second magnetic circuit 65 is offset relative to a centre of the first pole face 12 along the second axis $x$. In particular, the first connecting portion 18, which connects to the first pole face 12, has a width $D_{con}$ parallel to the second axis $x$ which is only a fraction of the width $D_{pf}$ of the first pole face in the same direction. The connection is also offset away from the coil 52 (in the positive $x$ direction as illustrated). Put another way, the first connecting portion 18 resembles the first connecting portion of the reference circuit 44, with a cut-out 67 in the form of a slot made extending inwards from the edge closest to the coil 52. The second pole piece 11 and second connecting portion 19 are configured in the same way, and connected across the same fraction $D_{con}/D_{pf}$ as for the first pole piece 10.

Secondly, instead of having a width parallel to the second axis $x$ which is equal to the measurement volume 8, the pole faces 12, 13 are extended parallel to the second axis $x$ beyond the edge of the measurement volume 8 (in the positive $x$ direction as illustrated). In other words, the pole faces 12, 13 overhang (or equivalently are extensions relative to) the measurement volume 8. The extension corresponds to the difference $D_{pf}$ - $D$ in between the width $D_{pf}$ of the pole faces 12, 13 and the width $D$ of the measurement volume 8. The extension corresponds to portions of the pole faces 12, 13 which are connected to the respective connecting portions 18, 19.

Thirdly, instead of extending diagonally relative to the pole faces 12, 13, across the fraction $D_{ean}/D_{pf}$ where they are connected, the connecting portions 18, 19 run substantially parallel to the second axis $x$, along a mid-line of the respective face 12, 13 (relative to the first axis $z$). This change may help improve symmetry and uniformity along the first axis $z$, although an additional fold of the sheet material component 66 is made compared to the reference magnetic circuit 44. Any residual asymmetry from the angling of the pole pieces 10, 11 towards the proximal ends 49 may optionally be compensated by offsetting the connecting portions 18, 19 parallel to the first axis $z$ (keeping them parallel to the second axis $x$).

Fourthly, small and generally elliptical cut-outs 58 are formed in the pole faces 12, 13 at the ends of the cut-outs 67 where the fraction $D_{con}/D_{pf}$ connected by the respective connecting portion begins. These small elliptical cut-outs 58 may act to reduce concentrations of magnetic field $\underline{B}$ under the junction and help to spread magnetic field $\underline{B}$ more evenly across the pole faces 12, 13. The cut-outs 58 need not be circular or elliptical, and may instead take the form of rectilinear slots, or any other shapes described herein in relation to cut-outs 58, 67 (Figure 11A).

The offsetting of the connections of the pole face 12, 13 to the rest of the second magnetic circuit 65 relative to the respective centres of the pole faces 12, 13, caused by the cut-outs 67, cause the magnetic field $\underline{B}$ to be spread more evenly across the measurement volume between the pole faces 12, 13. For example, referring also Figure 12, the magnetic field $\underline{B}$ in a cross-section of the second magnetic circuit 65 is visualised.

It may be observed that the magnetic field $\underline{B}$, including the component By parallel to the third axis $y$, is substantially uniform throughout the measurement volume 8, due to the shape of the cut-out 67 and extension $D_{pf} - D$ re-directing the magnetic field $\underline{B}$ (relative to the second reference magnetic circuit 44).

Referring again to Figure 11F, similarly to the second reference magnetic circuit 44 and the first magnetic circuit 56, the second magnetic circuit 65 is formed from sheet material (for example steel), by folding the sheet material component 66.

The sheet material component 66 includes first 68a and second 68b main portions separated by a first fold line 69 about which the component 66 is folded back on itself by 180°. When folded, the first fold line 69 provides a distal end 48 of the respective first or second pole piece 10, 11. At the outside ends of the sheet material component 66, which correspond to a proximal end 49 of the respective first or second pole piece 10, 11, tabs 50 are formed between which a strip of magnetic remanent material 51 is received. A magnetic field generator 15 in the form of a coil 52 is wound about the strip of magnetic remanent material 51, in the same way as for the reference magnetic circuit 44. Along the connected fraction $D_{con}/D_{pf}$, first 70a and second 70b flaps are separated from the respective main portions 68a, 68b of the sheet material component 66 by respective 90° fold lines 71a, 71b. Along the remainder of the width $D_{pf}$, the first 70a and second 70b flaps are separated from the respective main portions 68a, 68b of the sheet material component 66 by respective cut-outs 67. The fold lines 71a, 71b are oriented at 90° to the fold line 69, and the flaps 70a, 70b are folded in the same sense relative to the respective main portion 68a, 68b so that the flaps 70a, 70b form the pole face 12, 13 of the respective pole piece 10, 11. The remainder of the main portions 60a, 60b are folded along fold lines 72a, 72b to form the respective connecting portion 18, 19, and the angled portion leading to the tabs 50. The third set of fold lines 72a, 72b may be omitted, though the angling is preferable to reduce the total volume taken up by the second magnetic circuit 65.

Identical sheet material components 66 may be used to form both the first 10 and second 11 pole pieces by reversing the sense (e.g. clockwise to anti-clockwise) of folding about fold lines 69, 71a, 71b.

The cut-outs 58, 67, and indeed the rest of the shape of the sheet material component 66 may be formed by a stamping or die cutting process. Alternatively, cut-outs 54, 67 and/or the sheet material component 66 may be formed by any suitable subtractive manufacturing process, for example cutting with a blade or saw, machining, drilling, chemical etching, or laser or water cutting.

Referring also to Figures 13A to 13C, the calculated magnetic fields components $B_y$ experienced moving along a line (parallel to the second axis $x$) connecting the first 1 and second 2 electrodes (see Figure 1) are compared between the second reference magnetic circuit 44 and the second magnetic circuit 65.

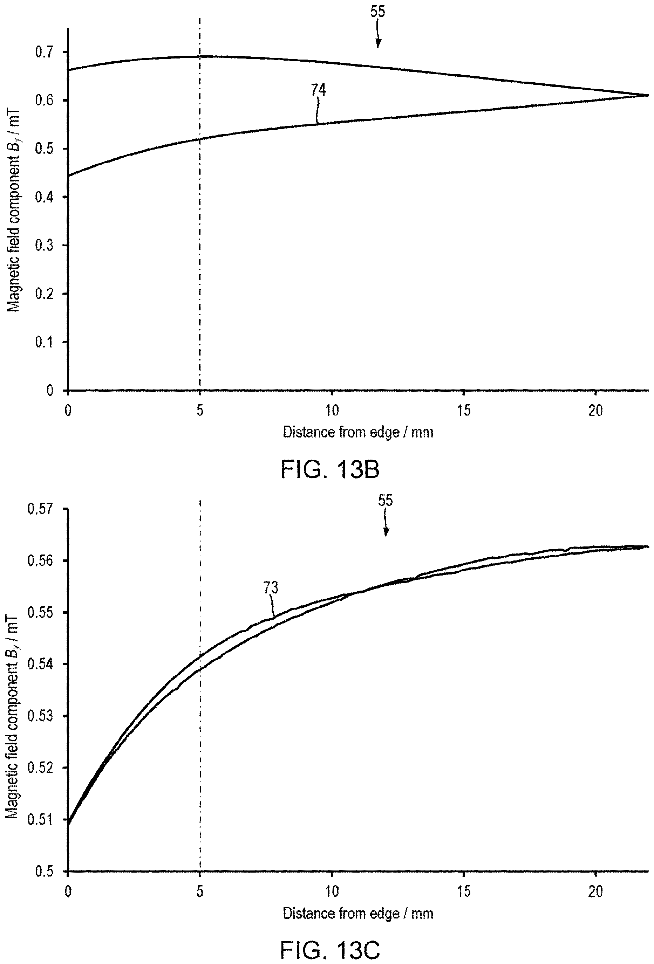

Figure 13A shows a direct comparison of a first profile 73 (solid line) corresponding to the component $B_y$ for the second magnetic circuit 65 and a second profile 74 (dashed line) corresponding to the component $B_y$ for the reference magnetic circuit 44. Figures 13B and 13C respectively shows the second profile 74 and first profile 73 folded back on themselves from the mid-point, in order to visualise the degree of symmetry/ asymmetry of the magnetic field $\underline{B}$.

Purely as a guide to the eye, an example of a central portion 55 has been indicated in Figures 13A to 13C using chained lines. This is purely for illustrative purposes.

Referring to Figure 13A in particular, it may be observed that the second magnetic circuit 65 has significantly enhanced uniformity compared to the reference magnetic circuit 44.

Referring in particular to Figures 13B and 13C, and noting the difference in scale of the vertical axes, it may be observed that the degree of symmetry obtained along the second axis $y$ is also significantly improved for the second magnetic circuit 65.

The second improved magnetic circuit 65 may be supported by a frame or support (not shown) formed from a non-magnetic material such as a polymeric material. The frame or support may secure the parts of the second improved magnetic circuit 65 relative to one another and/or the flow tube 4.

The shape changes of the second improved magnetic circuit 65 may equally be applied (with different optimisations such as specific dimensions) to the first reference magnetic circuit 14b.

Magnetic circuit configurations

In general, the magnetic circuit 14 may be formed from any number of pieces bonded together or otherwise held in place relative to one another (ideally with minimum air gaps and low magnetically permeable material).

For example, referring to Figure 14, a single-piece magnetic circuit 75 is shown.

The single-piece magnetic circuit 75 is a single, contiguous and generally C-shaped pole piece 76. Plates forming the pole faces 12, 13 may be welded, bonded, or otherwise supported in place, or preferably may be formed by bending flaps as described in relation to the reference 44, first 56 and second 65 magnetic circuits. The magnetic field generator 15, for example a coil 52, is provided around the single pole piece 76. The single pole piece 76 may be formed of soft or hard (remanent) magnetic materials. Additionally or alternatively, one or more regions (for example strips) of remanent magnetic material may be included, for example, sandwiched between two sheet material portions folded back on themselves to form the single pole piece 76.

Either of the first 56 and second 65 magnetic circuits could be modified to use a single pole piece 76. The advantage of a single pole piece 76 is that there may be no gaps or joins in the circuit aside from the intended gap between first 12 and second 13 pole faces. However, the single-piece magnetic circuit 75 may be more complex to manufacture compared to separate first 10 and second 11 pole piece

Referring also to Figure 15, a two-piece magnetic circuit 77 is shown.

The two-piece magnetic circuit 77 includes a first pole piece 10 and a second pole piece 11. The first magnetic circuit 56 is an example of a two-piece magnetic circuit 77. Legs 59 of the first 10 and second 11 pole pieces may simply abut end-to-end. However, preferably the legs 59 overlap in an overlap region 78. Together, the first 10 and second 11 pole pieces form a generally C-shaped magnetic circuit. Plates forming the pole faces 12, 13 may be welded, bonded, or otherwise supported in place, or preferably may be formed by bending flaps similarly to the reference 44, first 56 and second 65 magnetic circuits. The magnetic field generator 15, for example a coil 52, is provided around the overlap 78 region (or less preferably the touching ends of the legs 59). The first 10 and/or second 11 pole pieces may be formed of soft or hard (remanent) magnetic materials. Additionally or alternatively, one or more regions (for example strips) of remanent magnetic material may be included, for example, sandwiched between the overlapping ends of the legs 59.

The second magnetic circuit 65 could be modified to use a two-piece magnetic circuit 77.

Referring also to Figure 16, a three-piece magnetic circuit 79 is shown.

The two-piece magnetic circuit 77 includes a first pole piece 10 and a second pole piece 11 connected together using a central pole piece 80. The reference magnetic circuit 44 and the second magnetic circuit 65 are examples of three-piece magnetic circuits in which the central pole piece 80 takes the form of a remanent material strip 51. The central pole piece 80 overlaps, or is received within, the first 10 and second 11 pole pieces at either end. For example, as shown in the inset of Figure 16, and similarly to the reference magnetic circuit 44 and second magnetic circuit 56, the central pole piece 80 may be sandwiched between two portions of sheet material bent back on themselves to form the first 10 and second 11 pole pieces. Together, the first 10, second 11 and central 80 pole pieces form a generally C-shaped magnetic circuit. Plates forming the pole faces 12, 13 may be welded, bonded, or otherwise supported in place, or preferably may be formed by bending flaps similarly to the reference 44, first 56 and second 65 magnetic circuits. The magnetic field generator 15, for example a coil 52, is provided around the central pole piece 80. The first 10, second 11 and/or central pole pieces may be formed of soft or hard (remanent) magnetic materials. For example, in the reference magnetic circuit 44 and second magnetic circuit 65 the central pole pieces 80 are formed of remanent material strips. Additionally or alternatively, one or more regions (for example strips) of remanent magnetic material may be included, for example, sandwiched between other portions of the first 10 and/or second 11 pole pieces.

The first magnetic circuit 56 could be modified to use a three-piece magnetic circuit 77.

In any of the examples herein, a region of remanent magnetic material may include, or take the form of, a strip of remanent magnetic material. Examples of remanent magnetic materials (for strips or other portions of magnetic circuits 14) may include, without being limited to, hard magnetic materials such as, iron or hard magnetic steel, an alloy comprising iron and one or more of nickel, aluminium, cobalt, carbon and/or silicon, an alloy comprising iron and one or more of nickel, manganese, molybdenum, carbon and/or silicon. Further examples of suitable remanent magnetic materials include semi15 hard magnetic materials, such as, for example, Vacuumschmelze SENSORVAC (RTM), Hitachi ZMG423 (RTM) or MagneDur 20-4 (RTM).

When one or more regions of remanent magnetic material are included in the magnetic circuit 14, a magnetic field $\underline{B}$ directed across the measurement volume will include a component generated by the magnetic field generator 15 (for example coil 52) and a component corresponding to remanent polarisation of any regions of remanent magnetic material.

Configurations of the pole faces

In the example of the first magnetic circuit 56, each pole face 12,13 included a pair of cut outs 58 and an extension beyond the width of the measurement volume 8. However, this is only one example, and a large variety of alternative shapes could be optimised to provide enhanced uniformity of the magnetic field $\underline{B}$ across the measurement volume 8.

In the general case, the first pole face 12 may include one or more cut-outs 58. Additionally or alternatively the second pole face may include one or more cut-outs 58. The number, shape and/or positions of cut-outs 58 need not always be equivalent between the pole faces 12, 13. In generally, asymmetry of the pole faces 12, 13 about a plane perpendicular to the third axis y will only be desirable in cases where there is a need to compensate for an asymmetry of the external magnetic environment along the third axis y, if the measurement volume 8 is asymmetric along the third axis y, and so forth.

In any case, the one or more cut-outs 58 of the first pole face 12 and/or the one or more cut-outs 58 of the second pole face 13 should be shaped and arranged to enhance uniformity of magnetic field $\underline{B}$ within at least the central portion 55 of the measurement volume 8.

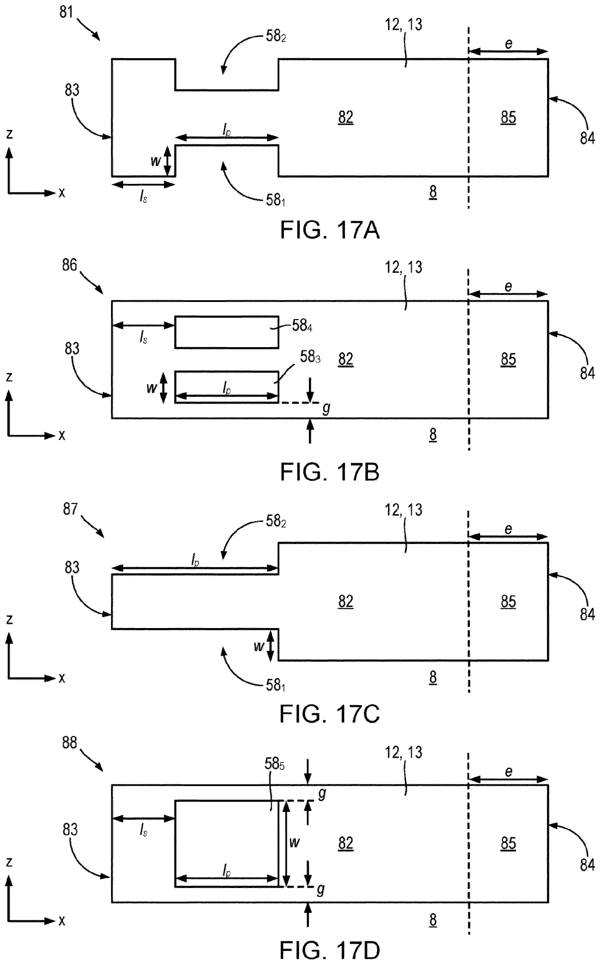

Referring also to Figure 17A, a plan view of a first exemplary pole face 81 including cut-outs 58 is shown.

The first exemplary pole face 81 may provide the first pole face 12 and/or the second pole face 13, and is used in the first magnetic circuit 56. A main region 82 overlaps the measurement volume 8. A near edge 83 is located on the same as the magnetic field generator 15, and a far edge 84 is located on the opposite side of the first exemplary pole face 81. Optionally, an extension region 85 may extend beyond the width D of the measurement volume 8. Generally but not necessarily the extension region 85 corresponding to the far edge 84. In other examples an extension region 85 may be formed from the near edge 83, though in most configurations this would not be desirable for improving magnetic field $\underline{B}$ uniformity.

The first exemplary pole face 81 includes first $58_1$ and second $58_2$ cut-outs which are rectangular and extend inwards from opposite edges extending parallel to the second axis *x*.

The layout of the first exemplary pole face 81 may be optimised for enhancing uniformity of the magnetic field $\underline{B}$ across the measurement volume 8, or at least a central portion 55 thereof, using the parameters of:

- Distance *is* from the near edge 83 at which the cut-outs $58_1$, $58_2$ begin;
- Width *w* (or equivalently depth) of the cut-outs $58_1$, $58_2$ parallel to the first axis *z*;
- Length $l_p$ of the cut-outs $58_1$, $58_2$ parallel to the second axis *x*; and
- Optionally, extension distance e of the far edge 84 beyond the edge of the measurement volume 8.

These parameters may be used in an iterative optimisation approach after selecting a desired metric for $\underline{B}$-field uniformity. Examples of suitable metrics include, without limitation:

- A difference between the maximum and minimum magnetic field magnitude $|\underline{B}|$ or component $B_y$ along a line connecting the centres of the electrodes 1, 2;
- A variance of the magnetic field magnitude $|\underline{B}|$ or component $B_y$ along the line connecting the centres of the electrodes 1, 2; or
- A variance of the magnetic field magnitude $|\underline{B}|$ or component $B_y$ across a measurement volume 8 (or at least a central portion 55 thereof) defined by the width $D$ of the flow tube 4 and having a length $L$ equal to twice a length of the pole faces 12, 13 parallel to the first axis z, centred on the pole faces 12, 13.

Any metric which will decrease (or increase) in response to increasing uniformity of the magnetic field $\underline{B}$ along the second axis *x* (and optionally the first axis *z*) may be used, and will provide at least some improvement (e.g. compared to the reference magnetic circuit 44).

The environment including the structure of the electromagnetic sensor 3 and the magnetic circuit 14 may be modelled, for example using well known finite element analysis techniques in a commercial software package to calculate magnetic fields $\underline{B}$ and evaluate the selected metric. The parameters, for example $l_s$, w, $l_p$ (and optionally *e* in the case of the first exemplary pole face 81) may then be iteratively optimised using known methods, for example gradient descent, parameter sweeps, or a combination thereof. In this way, the essential teachings of the present specification may be adapted to provide improved magnetic field $\underline{B}$ uniformity and hence reduced sensitivity to flow disturbances and improved linearity of sensor 3 response.

Optionally, simulations may be extended to include modelling of fluid flows 5 through the measurement volume 8 and coupling of the fluid flows 5 to the magnetic field $\underline{B}$. Such simulations may span a range of volumetric flow rates and common flow profiles.

The first $58_1$ and second $58_2$ cut-outs are shown arranged symmetrically about a mid-line of the first exemplary pole face 81 along the first axis *z*. This is usually preferred for symmetry along the first axis *z*. However, in sensors 3 in which there is significant exterior asymmetry along the first axis *z* (about the midline of the measurement volume 8), the arrangement of the first $58_1$ and second $58_2$ cut-outs may be made asymmetric about the mid-line of the first exemplary pole face 81 along the first axis z to compensate. This will add additional parameters to the optimisation. The number of free parameters for optimisation may be limited by only allowing one parameter of the cut outs $58_1$, $58_2$ to vary independently, for example fixing w and $l_p$ for both cut outs $58_1$, $58_2$ and allowing different values of $l_s$.

In the first exemplary pole face 81, the cut-outs $58_1$, $58_2$ extend up to an edge of the pole face 81. However, this is not essential, and in other examples one, some or all of the cut-outs 58 of a pole face may be wholly contained within a perimeter of that pole face 12,13. For example, referring also to Figure 17B, a second exemplary pole face 86 is shown.

The second exemplary pole face 86 may provide the first pole face 12 and/or the second pole face 13. The second exemplary pole face 86 is the same as the first exemplary pole face 81, except that it includes third $58_3$ and fourth $58_4$ cut-outs which are wholly contained within the perimeter of the second exemplary pole face 86. This arrangement adds an additional parameter in the form of an offset distance $g$ of the third $58_3$ and fourth $58_4$ cut-outs from the edges which extend parallel to the second axis $x$.

Similarly to the first $58_1$ and second $58_2$ cut-outs, the arrangement of the third $58_3$ and fourth $58_4$ cut-outs may be made asymmetric about the mid-line of the second exemplary pole face 86 along the first axis $z$ to compensate for external asymmetries.

Referring also to Figure 17C, a third exemplary pole face 87 is shown.

The third exemplary pole face 87 may provide the first pole face 12 and/or the second pole face 13. The third exemplary pole face 87 is the same as the first exemplary pole face 81, except that the distance $l_s$ from the near edge 83 at which the cut-outs $58_1$, $58_2$ begin has been set at zero.

Referring also to Figure 17D, a fourth exemplary pole face 88 is shown.

The fourth exemplary pole face 88 may provide the first pole face 12 and/or the second pole face 13. The fourth exemplary pole face 88 is the same as the second exemplary pole face 86, except that the third $58_3$ and fourth $58_4$ cut-outs are merged into a single fifth cut-out $58_5$. In this way, the number of independent parameters for optimisation may be reduced, since the parameters $w$ and $g$ sum to the overall length of the fourth exemplary pole face 88 parallel to the first axis $z$.

Similarly to the preceding pole faces 81, 86, 87, the arrangement of the fifth $58_5$ cut-out may be made asymmetric about the mid-line of the fourth exemplary pole face 88 along the first axis $z$ to compensate for external asymmetries. For example, the offsets $g$ from each side made be allowed to vary independently to offset the position of the fifth $58_5$ cut-out parallel to the first axis $z$.

In the first to fourth exemplary pole faces 81, 86, 87, 88, the cut-outs 58 extend entirely through the thickness of the material forming the pole face 12, 13. However, this is not essential and in other examples one, some or all of the cut-outs of a pole face 12, 13 may extend only partway through a thickness parallel to the third axis $y$. In other words, some or all of the cut-outs 58 may take the form of thinned regions instead of through-holes.

In the first to fourth exemplary pole faces 81, 86, 87, 88, the cut-outs 58 are generally rectangular. This is not essential, and cut-outs 58 may in general have a rectilinear shape, curved edges such as ellipses, or a combination of curved and rectilinear shapes. The cut-outs 58 may have any shapes, though preferably the shapes may be characterised by a reasonable number of parameters for optimisation purposes.

In the first to fourth exemplary pole faces 81, 86, 87, 88, at most two cut-outs 58 have been illustrated. However, this is not a limit, and more than two cut-outs 58 may be formed in either or both of the first 12 and second 13 pole faces.

Cut-outs 58 may be formed by stamping, or alternatively using any suitable subtractive manufacturing process, for example cutting with a blade or saw, machining, drilling, chemical etching, or laser or water cutting. In principle, pole faces 12, 13, 81, 86, 87, 88 including cut-outs 58 may be formed integrally, for example by casting or bulk-sintering, though this is not preferred due to additional cost and complexity. Alternatively, pole faces 12,13, 81, 86, 87, 88 including cut-outs 58 may be integrally formed using additive manufacturing techniques such as 3D printing with laser sintering.

In each of the first to fourth exemplary pole faces 81, 86, 87, 88, the extension 85 (which need not always be used) has been shown as a simple extension. However, the shape may be more complex, for example taking the form of one or more protrusions.

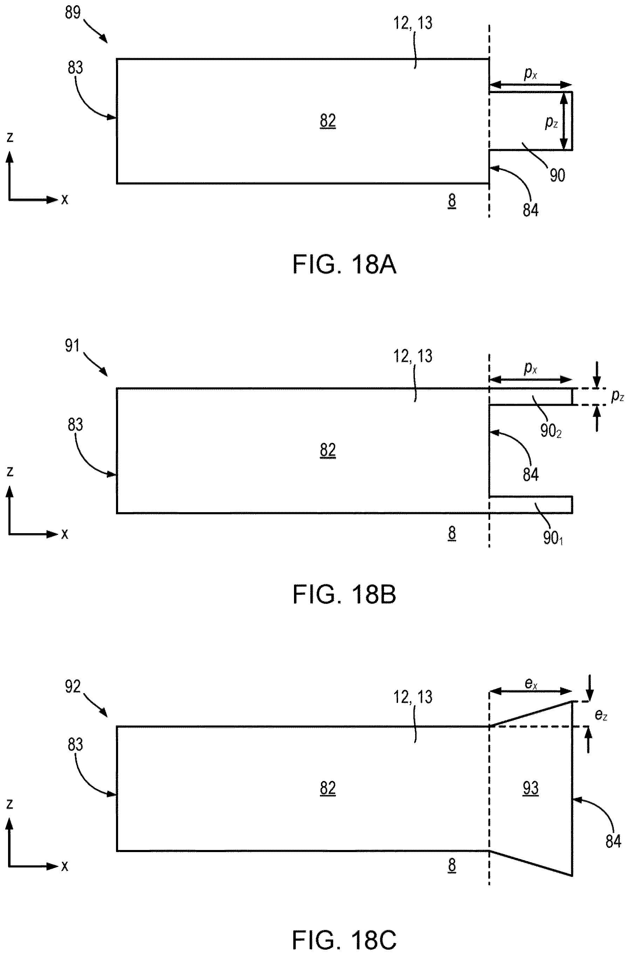

Referring also to Figure 18A, a fifth exemplary pole face 89 is shown.

The fifth exemplary pole face 89 may provide the first pole face 12 and/or the second pole face 13. The fifth exemplary pole face 89 differs from the first exemplary pole face 81 in that it includes no cut-outs 58, and in that the extension 85 is replaced with a single, width-wise protrusion 90 extending from the far edge 84. The width-wise protrusion 90 is located centrally along the first axis $z$, extends beyond the width $D$ of the measurement volume 8 by a distance $p_x$ parallel to the second axis $x$, and has a length $p_z$ parallel to the first axis $z$. The width-wise protrusion 90 has an aspect ratio $p_x/p_z$ which is preferably 1.5 or more.

Similarly to the preceding pole faces 81, 86, 87, 88, the arrangement of the width-wise protrusion 90 may be made asymmetric about the mid-line of the fifth exemplary pole face 89 along the first axis $z$ to compensate for external asymmetries. For example, instead of being located at the mid-point, an offset (not labelled) of the width-wise protrusion 90 parallel to the first axis $z$ may be introduced as an additional parameter for optimisation.

Any of the first to fourth exemplary pole faces 81, 86, 87, 88 may optionally use the width-wise protrusion 90 of the fifth exemplary pole face 89 instead of the simple extension 85. For example if further optimisation to improve magnetic field **B** uniformity is desired.

The fifth exemplary pole face 89 includes a single protrusion 90. However, more than one protrusion may be used. Referring also to Figure 18B, a sixth exemplary pole face 91 is shown.

The sixth exemplary pole face 91 may provide the first pole face 12 and/or the second pole face 13. The sixth exemplary pole face 91 differs from the fifth exemplary pole face 89 in that the single protrusion 90 is replaced with a pair of protrusions $90_1$, $90_2$, located flush with outer edges of the sixth exemplary pole face 91 along the first axis $z$. Referring again to Figure 4, it may be observed that the modelled contours tend to start curving around close to the far edge 84 (~$x$ = 25 mm in Figure 4). Instead of extending the entire pole face 12, 13, the sixth exemplary pole face 91 aims to use the pair of protrusions $90_1$, $90_2$ to counter this effect by concentrating magnetic field **B** towards the outer edges (along the first axis $z$) of the sixth exemplary pole face 91.

Similarly to the preceding pole faces 81, 86, 87, 88, 89, the arrangement of the pair of protrusions $90_1$, $90_2$ may be made asymmetric about the mid-line of the sixth exemplary pole face 91 along the first axis $z$ to compensate for external asymmetries. For example, the lengths $p_z$ along the first axis $z$ may be allowed to vary independently, or one of the pair of protrusions $90_1$, $90_2$ may be offset inwards parallel to the first axis $z$.

Any of the first to fourth exemplary pole faces 81, 86, 87, 88 may optionally use the pair of protrusions $90_1$, $90_2$ of the sixth exemplary pole face 91 instead of the simple extension 85, for example if further optimisation to improve magnetic field **B** uniformity is desired.

Instead of protrusions 90, other shapes of extension may be used. For example, referring also to Figure 18C, a seventh exemplary pole face 92 is shown.

The seventh exemplary pole face 92 may provide the first pole face 12 and/or the second pole face 13. The seventh exemplary pole face 92 differs from the fifth exemplary pole face 89 in that the single protrusion 90 is replaced with a flared extension 93. The flared extension 93 is generally trapezoidal, having parallel edges aligned with the first axis $z$. The flared extension 93 extends a distance $e_x$ beyond the measurement volume 8 parallel to the second axis $x$, and the length (parallel to the first axis $z$) of the flared extension at the far edge 84 exceeds that of the main region 82 by an amount $e_z$ on either side. The parameters $e_x$ and $e_z$ may be optimised as described hereinbefore to improve uniformity of the magnetic field **B** across the measurement volume 8, or at least a central portion 55 thereof.

Similarly to the preceding pole faces 81, 86, 87, 88, 89, 91, the arrangement of the flared extension 93 may be made asymmetric about the mid-line of the seventh exemplary pole face 92 along the first axis $z$ to compensate for external asymmetries. For example, the angled sides of the flared extension 93 need not be restricted to make identical angles to the second axis $x$.

Any of the first to fourth exemplary pole faces 81, 86, 87, 88 may optionally use the flared extension 93 of the seventh exemplary pole face 92 instead of the simple extension 85. For example if further optimisation to improve magnetic field **B** uniformity is desired.

Although shown with generally straight or rectilinear edges, extensions 85, 93 and/or protrusions 90 are not limited to this, and any rectilinear, curved, or a combination of edges may be used. Shapes which can be characterised with a reasonable number of parameters are preferable for optimisation.

Configurations of the connecting portions

The connecting portions 18, 19 which connect pole faces 12, 13, 92 to the rest of the magnetic circuit 14 may also be optimised in a large variety of ways. This may be done jointly or sequentially with optimisation of the shapes of pole faces 12, 13, including any of the configurations of the first to seventh pole faces 81, 86, 87, 88, 89, 91, 92.

The simplest option is to have connecting portions 18, 19 which extend across the entire width $D_{pf}$ of the respective pole faces 12, 13 parallel to the second axis $x$, as shown in the first magnetic circuit 56.

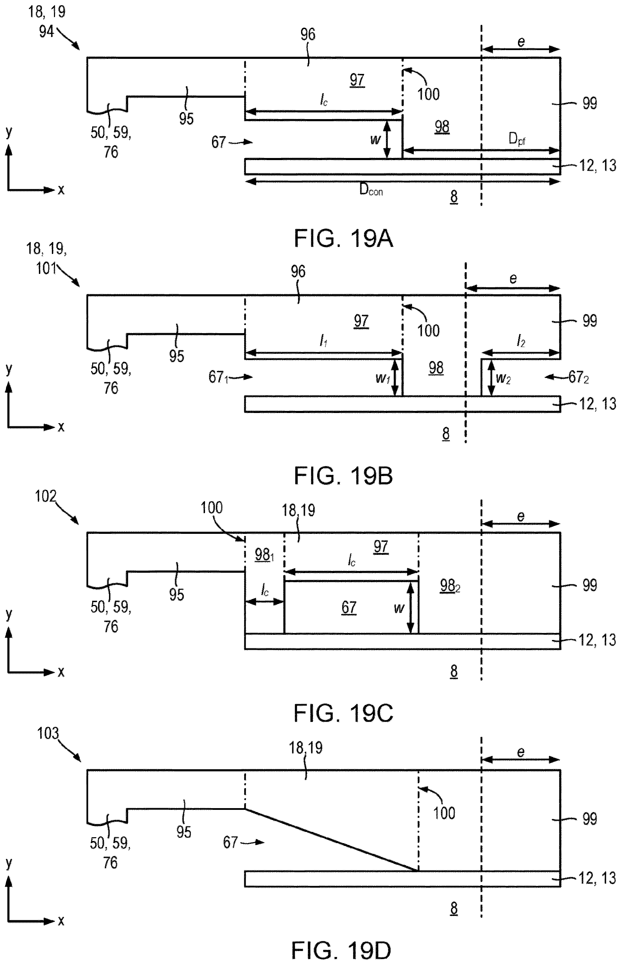

Optimisation is possible using a cut-out 67 from the connecting portion 18, 19, for example, referring also to Figure 19A a first exemplary connecting portion 94 is shown.

The first exemplary connecting portion 94 is implemented in the second magnetic circuit 65. The first exemplary connecting portion 94 may be used in conjunction with any pole face 12, 13 configuration, including but not limited to the first to seventh pole faces 81, 86, 87, 88, 89, 91, 92.

The first exemplary connecting portion 94 includes a spar 95 spanning between a main portion 96 and the tab 50, leg 59, remainder of the single pole piece 76 and so forth. The main portion 96 includes a disconnected region 97 which is separated from the pole face 12, 13 by a cut-out 67, and a connected region 98 through which a majority of the magnetic field **B** will be directed to the pole face 12, 13. Some leakage of magnetic field **B** will occur between the disconnected region 97 and the pole face 12, 13, but primarily magnetic field **B** within the disconnected region 97 will be directed between the spar 95 and the connected region 98 (see for example Figure 12). Optionally, the first exemplary connecting portion 94 may also include an extension 99 connected to an extension 85 (or equivalent) of the pole face 12, 13.

Optionally, the first exemplary connecting portion 94 may be folded to an angle about fold line 100. Fold line 100 is illustrated as being located at the boundary between the disconnected 97 and connected 98 regions, but may be positioned anywhere in the disconnected region 97 or spar 95.

Parameters used for optimising (using a metric as described hereinbefore) the first exemplary connecting portion 94 to enhance uniformity of the magnetic field **B** may include:

- Width $w$ (or equivalently depth) of the cut-out 67 parallel to the third axis $y$;
- Length $l_c$ of the cut-out 67 parallel to the second axis $x$; and
- Optionally, extension distance e beyond the edge of the measurement volume 8.

Equivalently, the length $l_c$ is related to the connection width $D_{con}$ discussed previously as $D_{pf} = l_c + D_{con}$. The width $w$ may be such that the disconnected region 97 is flush with the spar 95 (i.e. there is no detectable boundary).

The shape of the first exemplary connecting portion 94 may be optimised jointly or sequentially with the shape of the pole face 12, 13.

More than one cut-out may be formed in the connections portion 18, 19, for example referring also to Figure 19B a second exemplary connecting portion 101 is shown.

The second exemplary connecting portion 101 may be used in conjunction with any pole face 12, 13 configuration, including but not limited to the first to seventh pole faces 81, 86, 87, 88, 89, 91, 92.

The second exemplary connecting portion 101 is the same as the first exemplary connecting portion 94, except that it includes a pair of cut-outs 671, 672, with a first cut out 671 the same as the cut-out 67 of the first exemplary connecting portion 94 and the second cut-out $67_2$ extending inwards from the opposite edge of the connecting portion 101 along the second axis $x$.

The lengths $l_1$, $l_2$ and widths/depths $w_1$, $w_2$ of the cut-outs $67_1$, $67_2$ may all be varied independently for optimisation, or the number of free parameters may be reduced by imposing constraints such as, for example, equal widths/depths $w_1 = w_2$.

Cut-outs 67, $67_1$, $67_2$ of a connecting portion 18, 19, 94, 101 need not extend up to an exterior edge. Referring also to Figure 19C, a third exemplary connecting portion 102 is shown.

The third exemplary connecting portion 102 may be used in conjunction with any pole face 12, 13 configuration, including but not limited to the first to seventh pole faces 81, 86, 87, 88, 89, 91, 92.

The third exemplary connecting portion 102 is the same as the first exemplary connecting portion 94, except that the cut-out 67 does not extend to any edges of the connecting portion 102. A distance $l_c$ parallel to the second axis x separates the end of the spar 95 from the start of the cut-out 67. Consequently the third exemplary connecting portion 102 includes a first connected region $98_1$ connected to the spar 95, and separated from a second connected region $98_2$ by the disconnected region 97 corresponding to the cut-out 67.

Referring also to Figure 19D, a fourth exemplary connecting portion 103 is shown.

The fourth exemplary connecting portion 103 may be used in conjunction with any pole face 12, 13 configuration, including but not limited to the first to seventh pole faces 81, 86, 87, 88, 89, 91, 92.

The fourth exemplary connecting portion 103 is the same as the first exemplary connecting portion 94, except that instead of having step transitions between the spar 95 and the disconnected region 97 and between the disconnected region 97 and the connected region 98, the cut-out 67 is shaped to taper and provide a linear transition between the height of the spar 95 parallel to the third axis $y$ and the height of the connected portion 98 parallel to the third axis $y$.

In the first to fourth exemplary connecting portions 94, 101, 102, 103, the cut-outs 67 extend entirely through the thickness of the material. However, this is not essential and in other examples one, some or all of the cut-outs of a connecting portion 18, 19 may extend only partway through the thickness. In other words, some or all of the cut-outs 67 may take the form of thinned regions instead of through-holes.

In the first to fourth exemplary connecting portions 94, 101, 102, 103, the cut-outs 67 are generally rectangular or triangular. This is not essential, and cut-outs 67 may in general have a rectilinear shape, curved edges such as ellipses, or a combination of curved and rectilinear shapes. The cut-outs 67 may have any shape, though preferably the shapes may be characterisable by a reasonable number of parameters for optimisation purposes.

In the first to fourth exemplary connecting portions 94, 101, 102, 103, at most two cut-outs 67 have been illustrated. However, this is not a limit, and more than two cut-outs 67 may be formed in either or both of the first 18 and second 19 connecting portions.

Cut-outs 67 may be formed by stamping, or alternatively using any suitable subtractive manufacturing process, for example cutting with a blade or saw, machining, drilling, chemical etching, or laser or water cutting. In principle, connecting portions 18, 19, 94, 101, 102, 103 including cut-outs 67 may be formed integrally, for example by casting or bulk-sintering, though this is not preferred due to additional cost and complexity. Alternatively, connecting portions 18, 19, 94, 101,102, 103 including cut-outs 67 may be integrally formed using additive manufacturing techniques such as 3D printing with laser sintering.

In the first to fourth exemplary connecting portions 94, 101, 102, 103, the extension 99 (which need not always be used) has been shown as a simple extension. However, the shape may be more complex, for example taking the form of one or more protrusions, analogous to width-wise protrusions 90 of the pole faces 12, 13.

**Modifications**

It will be appreciated that various modifications may be made to the embodiments hereinbefore described. Such modifications may involve equivalent and other features which are already known in the methods and devices for electromagnetic flow sensing, and which may be used instead of or in addition to features already described herein. Features of one embodiment may be replaced or supplemented by features of another embodiment.

In the illustrated examples, the edges of the pole faces 12, 13 closest to the magnetic field generator 15 (for example coil 52) have extended up the edge of the measurement volume 8 closest to the magnetic field generator 15. However, this is not essential, and in other examples the edge of the pole face(s) 12, 13 closest to the magnetic field generator 15 need not extend to the edge of the measurement volume 8. In other words, on the side closest to the magnetic field generator 15, moving parallel to the second axis x, there may be a gap between the start of the measurement volume 8 and the near edge 83 of the first 12 and/or second 13 pole face.

An electromagnetic flow sensor 3 using an improved magnetic circuit described herein, for example the first 56 or second 65 magnetic circuit, may form at least a part of a full-bore electromagnetic flowmeter. A full-bore electromagnetic flowmeter may sample the flow across an entire cross section of the flow tube 4. Alternatively, such an electromagnetic flow sensor 3 may form at least a part of an insertion type electromagnetic flowmeter, which samples the flow across a portion of the flow tube 4 (in which case the electrode 1, 2 spacing defines the width of the measurement volume 8 parallel to the second axis x). An electromagnetic flow sensor 3 using an improved magnetic circuit described herein, for example the first 56 or second 65 magnetic circuit, may be used with a variety of sizes of flow tubes. For example, an internal bore diameter of the flow tube can be between about 12 mm (~½") and 51 mm (~2"), but may be smaller or larger depending on the specific application.

The first and second electrodes may have a diameter between about 2 mm and about 10 mm, or between about 3 mm and about 6 mm, or between about 4 mm and about 5 mm. In reference to a dimension, the term "about" may correspond to a tolerance of $\pm 0.5$ mm.

Although generally described in relation to improved uniformity of the magnetic field **B** across at least the central portion 55 of the measurement volume 8 (which may be the portion across which an optimisation metric is calculated), in some examples the shape of the magnetic circuit may be arranged to provide substantial uniformity across the entire width D of the measurement volume 8

An electromagnetic flow sensor 3 using an improved magnetic circuit described herein, for example the first 56 or second 65 magnetic circuit, is preferably optimised sufficiently to comply with the test standards (6.3.5) of OIML R49 flow disturbance tests.

The OIML R49 standard contains tests to check the sensitivity of a meter/sensor to upstream and downstream flow disturbances such as abnormal cross-sectional velocity profiles and rotational swirl. Obstructions are inserted to create both abnormal velocity profiles and swirl. If the sensitivity of the meter/sensor is based on a calibration performed with a predetermined velocity field in the presence of a non-uniform magnetic field, the creation of an alternative velocity field with flow disturbers will disrupt the measurement and this will show up in the OIML R49 flow disturbance test.

The examples described herein have been illustrated and explained in relation to first, second and third axes aligned parallel to *z, x* and *y* axes of a mutually orthogonal Cartesian coordinate system. However, this is not essential, and in general the first axis may be transverse to the second axis, and the third axis may be transverse to both the first and second axes. As used herein, the term transverse means situated across something or extending across something. In other words, the first, second and third axes are all oriented along different directions. This includes the first, second and third axes being substantially or exactly perpendicular (as shown in the Figures). Herein, "substantially perpendicular" may mean within an angle of $\pm 10°$.

Although claims have been formulated in this application to particular combinations of features, it should be understood that the scope of the disclosure of the present invention also includes any novel features or any novel combination of features disclosed herein either explicitly or implicitly or any generalization thereof, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

**Claims**

**1.** An electromagnetic flow sensor, comprising:

a flow tube extending along a first axis and through which a fluid is able to flow;
first and second electrodes spaced apart along a second axis transverse to the first axis to span a measurement volume within the flow tube;

a magnetic circuit comprising a coil and a gap defined between first and second parallel pole faces, wherein the flow tube is received within the gap such that magnetic field about the magnetic circuit is directed across the measurement volume parallel to a third axis transverse to the first and second axes;

wherein the magnetic circuit is shaped to enhance uniformity of magnetic field within at least a central portion of the measurement volume.

2. The electromagnetic flow sensor of claim 1, wherein the magnetic circuit comprises:

a first pole piece comprising a proximal end and a distal end forming the first pole face;
a second pole piece comprising a proximal end and a distal end forming the second pole face.

3. The electromagnetic flow sensor of claim 1 or claim 2, wherein the magnetic circuit comprises one or more regions of remanent magnetic material.

4. The electromagnetic flow sensor of claim 3, wherein the coil is wrapped around a region of remanent magnetic material.

5. The electromagnetic flow sensor of any one of claims 1 to 4, wherein the first and second pole faces are formed from sheet material.

6. The electromagnetic flow sensor of any one of claims 1 to 5, wherein the magnetic circuit comprises a single coil, and wherein the magnetic circuit is shaped to at least partially offset non-uniformity of magnetic field within at least the central portion of the measurement region arising from the single coil drive arrangement.

7. The electromagnetic flow sensor of any one of claims 1 to 6, wherein the magnetic circuit is shaped such that along a line connecting the respective centres of the first and second electrodes across the measurement volume, within the portion of the line within the central portion, a minimum magnetic field is greater than or equal to 70% or more of a maximum magnetic field.

8. The electromagnetic flow sensor of any one of claims 1 to 7, wherein the first pole face comprises one or more cut-outs; and/or
the second pole face comprises one or more cut-outs.

9. The electromagnetic flow sensor of claim 8, wherein when projected onto a plane perpendicular to the third axis, a cut-out of the first pole face overlaps a cut-out of the second pole face.

10. The electromagnetic flow sensor of any one of claims 1 to 9, wherein the measurement volume has a width corresponding to the separation of the first and second electrodes parallel to the second axis, and wherein the first and second pole faces have respective widths parallel to the second axis;

wherein the width of the first pole face extends beyond the width of the measurement volume; and/or
the width of the second pole face extends beyond the width of the measurement volume.

11. The electromagnetic flow sensor of claim 10, wherein:

the first pole face comprises one or more width-wise protrusions extending beyond the width of the measurement volume parallel to the second axis; and/or
the second pole face comprises one or more width-wise protrusions extending beyond the width of the measurement volume parallel to the second axis.

12. The electromagnetic flow sensor of any one of claims 1 to 11, wherein a connection of the first pole face to the magnetic circuit is offset relative to a centre of the first pole face along the second axis; and/or
wherein a connection of the second pole face to the magnetic circuit is offset relative to a centre of the second pole face along the second axis.

13. The electromagnetic flow sensor of claim 12, wherein:

the first pole face is connected to the magnetic circuit by a first connecting portion which extends away from the gap along the third axis, wherein the first connecting portion has a width extending along at least a portion of the width of the first pole face parallel to the second axis; and/or

the second pole face is connected to the magnetic circuit by a second connecting portion which extends away from the gap along the third axis, wherein the second connecting portion has a width extending along at least a portion of the width of the second pole face parallel to the second axis.

14. The electromagnetic sensor of claim 13, wherein the first connecting portion comprises one or more cut-outs and/or wherein the second connecting portion comprises one or more cut-outs.

15. A method comprising using the electromagnetic flow sensor of any one of claims 1 to 14 to meter a flow of fluid through the flow tube.

FIG. 1

FIG. 2

FIG. 3A

FIG. 3B

FIG. 4

$L_{meter}$

FIG. 5

FIG. 6

14, 44

50
11
51
49
19
15, 52
49
53b
48
12
53b
50
13
y
10
18
48
z — x
53a
53a

## FIG. 7A

14, 44

53b
x
z
15, 52
11
53a

## FIG. 7B

46

61.73        61.73
53a        53b
50        50
9.02
54a        54b
46a        47        46b
∠90.00°    ∠180.00°    ∠90.00°

## FIG. 7C

FIG. 8A

FIG. 8B

FIG. 8C

FIG. 8D

FIG. 8E

FIG. 8F

FIG. 9A

FIG. 9B

FIG. 9C

FIG. 9D

FIG. 10A    x / mm

FIG. 10B    x / mm

FIG. 10C

FIG. 11A

FIG. 11B

FIG. 11C

FIG. 11D

FIG. 11E

FIG. 11F

FIG. 12

FIG. 13A

FIG. 13B

FIG. 13C

14, 75

76

19

13

15, 52

76

y

x

12

76

18

## FIG. 14

14, 77

11

19

59

13

15, 52

78

59

12

y

x

10

18

## FIG. 15

14, 79

11

x

z

11

19

80

13

15, 52

80

y

x

10

18

## FIG. 16

FIG. 17A

FIG. 17B

FIG. 17C

FIG. 17D

FIG. 18A

FIG. 18B

FIG. 18C

FIG. 19A

FIG. 19B

FIG. 19C

FIG. 19D

Europäisches
Patentamt

European
Patent Office

Office européen
des brevets

# EUROPEAN SEARCH REPORT

**Application Number**

EP 23 16 7141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/052047 A1 (PROFETA JR JOSEPH ANTHONY [US] ET AL) 23 February 2017 (2017-02-23) * paragraphs [0008], [0014] – [0016], [0029] – [0043]; figures 1-10 * | 1-15 | INV. G01F1/58 |
| X | CN 206 300 690 U (LIAONING SCALER TECH CO LTD) 4 July 2017 (2017-07-04) * paragraphs [0004] – [0026]; figures 1, 2 * | 1-9,12, 13,15 | |
| X | CN 105 571 660 A (NINGBO WATER METER CO LTD) 11 May 2016 (2016-05-11) * paragraphs [0002] – [0032]; figures 1, 2, 5 * | 1-7,10, 15 | |
| X | US 2021/063216 A1 (GONZALEZ-PELAYO JUAN CARLOS [NL] ET AL) 4 March 2021 (2021-03-04) * paragraphs [0048] – [0056]; figures 4-7 * | 1,2,5, 7-15 | |
| A | DE 10 2009 001413 A1 (IFM ELECTRONIC GMBH [DE]) 16 September 2010 (2010-09-16) * paragraph [0027]; figure 1 * | 7 | TECHNICAL FIELDS SEARCHED (IPC) G01F |
| A | US 4 809 559 A (KASAI SYOZO [JP]) 7 March 1989 (1989-03-07) * column 5, lines 10-35; figure 5 * | 7 | |
| A | WO 2021/074241 A1 (FLODATIX LTD [GB]) 22 April 2021 (2021-04-22) * page 17, paragraph 2; figure 1 * | 7 | |
| A | EP 3 435 040 B1 (SENTEC LTD [GB]) 25 March 2020 (2020-03-25) * paragraph [0040]; figure 1 * | 1-6 | |

The present search report has been drawn up for all claims

| Place of search | Date of completion of the search | Examiner |
|---|---|---|
| The Hague | 21 September 2023 | Myrillas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 7141

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2023

| Patent document cited in search report | | Publication date | Patent family member(s) | | Publication date |
|---|---|---|---|---|---|
| US 2017052047 | A1 | 23-02-2017 | AU | 2016309618 A1 | 25-01-2018 |
| | | | CA | 2994683 A1 | 23-02-2017 |
| | | | CN | 107835934 A | 23-03-2018 |
| | | | EP | 3338063 A1 | 27-06-2018 |
| | | | ES | 2781204 T3 | 31-08-2020 |
| | | | US | 2017052047 A1 | 23-02-2017 |
| | | | WO | 2017030693 A1 | 23-02-2017 |
| CN 206300690 | U | 04-07-2017 | NONE | | |
| CN 105571660 | A | 11-05-2016 | NONE | | |
| US 2021063216 | A1 | 04-03-2021 | CN | 112444292 A | 05-03-2021 |
| | | | DE | 102019123528 A1 | 04-03-2021 |
| | | | EP | 3789741 A1 | 10-03-2021 |
| | | | US | 2021063216 A1 | 04-03-2021 |
| DE 102009001413 | A1 | 16-09-2010 | NONE | | |
| US 4809559 | A | 07-03-1989 | NONE | | |
| WO 2021074241 | A1 | 22-04-2021 | CA | 3156925 A1 | 22-04-2021 |
| | | | EP | 4031841 A1 | 27-07-2022 |
| | | | GB | 2588201 A | 21-04-2021 |
| | | | WO | 2021074241 A1 | 22-04-2021 |
| EP 3435040 | B1 | 25-03-2020 | AU | 2016299404 A1 | 15-02-2018 |
| | | | BR | 112018001384 A2 | 11-09-2018 |
| | | | CA | 2992919 A1 | 02-02-2017 |
| | | | CL | 2018000239 A1 | 13-07-2018 |
| | | | CN | 107923776 A | 17-04-2018 |
| | | | CO | 2018000981 A2 | 12-06-2018 |
| | | | EP | 3329220 A1 | 06-06-2018 |
| | | | EP | 3435040 A1 | 30-01-2019 |
| | | | ES | 2796124 T3 | 25-11-2020 |
| | | | JP | 2018525626 A | 06-09-2018 |
| | | | KR | 20180044301 A | 02-05-2018 |
| | | | RU | 2018106882 A | 28-08-2019 |
| | | | SA | 518390810 B1 | 05-09-2021 |
| | | | US | 2018216978 A1 | 02-08-2018 |
| | | | WO | 2017017463 A1 | 02-02-2017 |
| | | | ZA | 201800603 B | 31-07-2019 |

EPO FORM P0459

For more details about this annex : see Official Journal of the European Patent Office, No. 12/82

**EP 4 443 115 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0019174 A1
- US 3911742 A
- WO 2017017463 A1
- WO 2018138518 A1
- US 4716769 A